# EUROPEAN PATENT APPLICATION

(11) **EP 4 492 847 A1**
(43) Date of publication of application: **15.01.2025**
(21) Application number: 22930907.5
(22) Date of filing: 11.03.2022
(51) Int. Cl.: H04W 16/28, H04W 88/04

(54) **REPEATER, BASE STATION, AND COMMUNICATION METHOD**

(71) Applicant: NTT DOCOMO, INC., Tokyo 100-6150 (JP)
(72) Inventor: KURITA, Daisuke, Tokyo 100-6150 (JP); HARADA, Hiroki, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/010917
(87) International publication number: WO 2023/170926

(57) **Abstract**

This repeater comprises: a reception unit that receives beams from a base station; and a control unit that determines a terminal-oriented beam on the basis of beam information of the repeater included in a received beam and associated with each of the beams from the repeater.

## Description

### Technical Field

The present disclosure relates to a repeater, a base station, and a communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

In Rel-18 of 3GPP, a Study Item (SI) on network-controlled repeaters was established (e.g., see Non-Patent Literature (hereinafter, referred to as NPL) 1). It was determined to discuss beam control, timing control, ON/OFF control of power in Downlink-Uplink (DL-UL), and the like on network-controlled repeaters, unlike conventional amplify-and-forward repeaters.

Note that a network-controlled repeater may be referred to as an NR network-controlled repeater or smart repeater. Hereinafter, a network-controlled repeater may be simply referred to as a repeater.

### Citation List

### Non-Patent Literature

NPL 1 3GPP TSG RAN Meeting #94e, RP-213700, Electronic Meeting, Dec. 6-17, 2021

### Summary of Invention

However, there is scope for further study on a method for controlling a beam of the repeater.

One aspect of the present disclosure is to provide a repeater and a communication method that appropriately control a beam of a repeater.

### Solution to Problem

A repeater according to one aspect of the present disclosure includes: a reception section configured to receive a beam from a base station; and a control section configured to determine a beam for a terminal based on beam information of the repeater, the beam information being included in the beam received and being associated with each beam of the repeater.

A communication method according to one aspect of the present disclosure is a communication method for a repeater, the communication method including: receiving a beam from a base station; and determining a beam for a terminal based on beam information of the repeater, the beam information being included in the beam received and being associated with each beam of the repeater.

Abase station according to one aspect of the present disclosure includes: a control section configured to include beam information of a repeater in a beam of the base station, the beam information being associated with each beam of the repeater; and a transmission section configured to transmit the beam to the repeater.

A communication method according to one aspect of the present disclosure is a communication method for a base station, the communication method including: including beam information of a repeater in a beam of the base station, the beam information being associated with each beam of the repeater; and transmitting the beam to the repeater.

### Brief Description of Drawings

FIG. 1 illustrates an exemplary radio communication system according to an embodiment;
FIG. 2 illustrates an exemplary frequency range used in the radio communication system;
FIG. 3 illustrates an exemplary configuration of a radio frame, subframe, and slot used in the radio communication system;
FIG. 4 illustrates an example of Proposal 1-Type 1;
FIG. 5 illustrates an example of Proposal 1-Type 2;
FIG. 6 illustrates an example of Proposal 2-Option 1;
FIG. 7 illustrates an example of Proposal 2-Option 2;
FIG. 8 illustrates an example of Proposal 2-Option 3;
FIG. 9 illustrates an example of Proposal 2-Option 4;
FIG. 10 illustrates an example of Proposal 2-Option 5;
FIG. 11 illustrates an example of Proposal 3-Option 1;
FIG. 12 illustrates another example of Proposal 3-Option 1;
FIG. 13 illustrates an example of Proposal 3-Option 2;
FIG. 14 illustrates an example of Proposal 3-Option 3;
FIG. 15 illustrates an example of Proposal 3-Option 4;
FIG. 16 illustrates another example of Proposal 3-Option 4;
FIG. 17 illustrates unified TCI state indication DCI of Rel-17;
FIG. 18 illustrates an example of Proposal 5-Option 1;
FIG. 19 illustrates another example of Proposal 5-Option 1;
FIG. 20 illustrates an example of Proposal 5-Option 2;
FIG. 21 illustrates an example of Proposal 5-Option 3;
FIG. 22 illustrates an example of Proposal 5-Option 4;
FIG. 23 illustrates another example of Proposal 5-Option 4;
FIG. 24 illustrates exemplary RRC parameters;
FIG. 25 illustrates an example of Variation 1;
FIG. 26 illustrates an example of Variation 2;
FIG. 27 illustrates another example of Variation 2;
FIG. 28 illustrates an exemplary functional configuration of a base station and a repeater according to the embodiment;
FIG. 29 illustrates an example of a hardware configuration of the base station and the repeater according to the embodiment; and
FIG. 30 illustrates an exemplary configuration of a vehicle.

### Description of Embodiments

Hereinafter, an embodiment according to an aspect of the present disclosure will be described with reference to the drawings.

### <System Configuration>

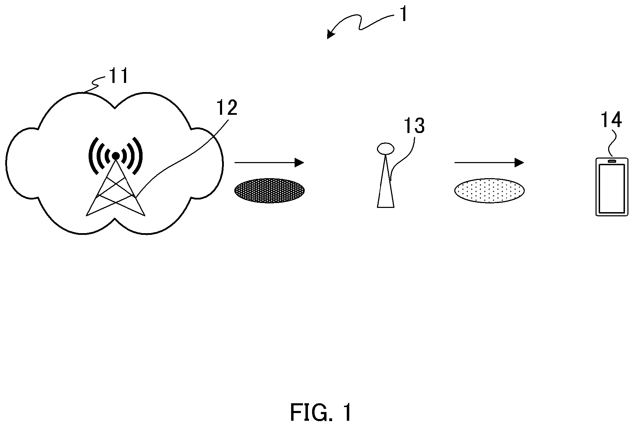

FIG. 1 illustrates exemplary radio communication system 1 according to an embodiment. Radio communication system 1 is, for example, a radio communication system in accordance with 5G New Radio (NR). Radio communication system 1 includes Next Generation-Radio Access Network (NG-RAN) 11, base station 12, repeater 13, and terminal 14.

Note that radio communication system 1 may be a radio communication system in accordance with a scheme called Beyond 5G, 5G Evolution, or 6G. Base station 12 may be referred to as gNB. Terminal 14 may be referred to as User Equipment (UE).

NG-RAN 20 practically includes one or more NG-RAN nodes (or ng-eNB) and is connected to a core network in accordance with 5G (e.g., 5GC, not illustrated). For example, NG-RAN 20 includes base station 12 and is connected to 5GC. Note that NG-RAN 20 and 5GC may be simply expressed as "network."

Base station 12 is, for example, a base station in accordance with 5G, and performs radio communication in accordance with 5G with terminal 14 through repeater 13. Base station 12 may support a Massive Multiple-Input Multiple-Output (MIMO), by which a beam BM with higher directivity is generated by controlling radio signals transmitted from a plurality of antenna elements, carrier aggregation (CA), by which a plurality of component carriers (CC) are bundled together to be used, dual connectivity (DC), by which base station 12 cooperates with another base station (not illustrated) to communicate with terminal 14, and the like. Note that the beam may also be referred to as a spatial domain filter.

Repeater 13 is a network-controlled repeater of which operation is controlled by a network. The operations of repeater such as beam control are controlled by the network, for example, and then repeater 13 relays communications between base station 12 and terminal 14.

Further, radio communication system 1 supports a plurality of frequency ranges (FRs).

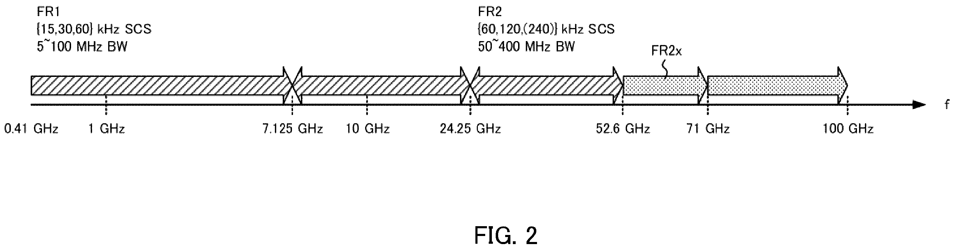

FIG. 2 illustrates an exemplary frequency range used in radio communication system 1. As illustrated in FIG. 2, radio communication system 1 supports FR1 and FR2. The frequency band of each FR is, for example, as follows:
- FR1: 410 MHz to 7.125 GHz
- FR2: 24.25 GHz to 52.6 GHz

In FR1, Sub-Carrier Spacing (SCS) of 15 kHz, 30 kHz, or 60 kHz may be used, and a bandwidth (BW) of 5 MHz to 100 MHz may be used. FR 2 is higher than FR1, and SCS of 60 kHz or 120 kHz (may include 240 kHz) may be used, and a bandwidth (BW) of 50 MHz to 400 MHz may be used.

Note that the SCS may be interpreted as numerology. The numerology is defined in 3GPP TS38.300 and corresponds to one subcarrier interval in a frequency domain.

Furthermore, radio communication system 1 may support a frequency band higher than the frequency band of FR2. For example, radio communication system 1 may support a frequency band of more than 52.6 GHz and up to 114.25 GHz. Such a high frequency band may be referred to as "FR2x" for convenience. When a bandwidth exceeding 52.6 GHz is used, Cyclic Prefix-Orthogonal Frequency Division Multiplexing (CP-OFDM)/Discrete Fourier Transform-Spread-Orthogonal Frequency Division Multiplexing (DFT-S-OFDM) having greater SCS may be applied.

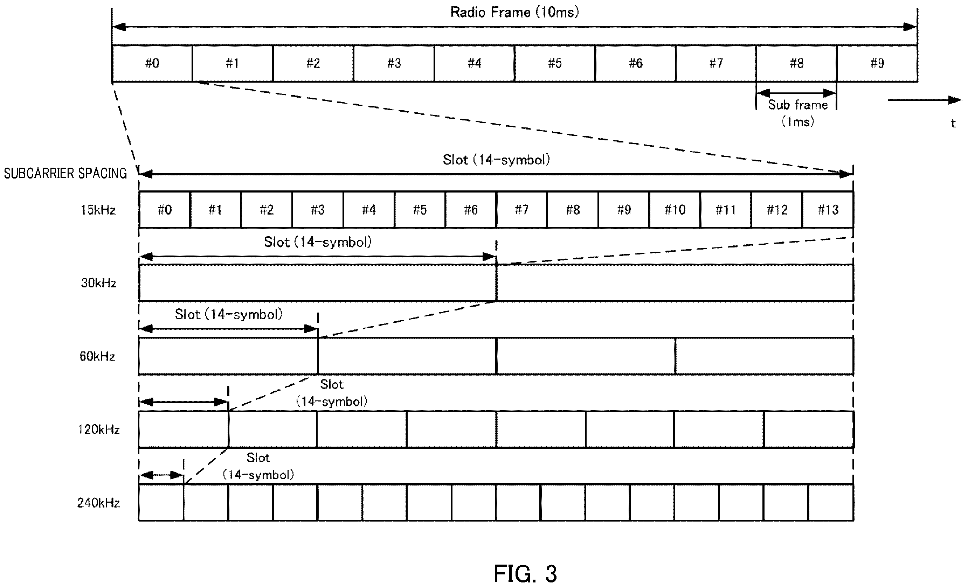

FIG. 3 illustrates an exemplary configuration of a radio frame, subframe, and slot used in radio communication system 1. As illustrated in FIG. 3, one slot is composed of 14 symbols, and the symbol duration (and slot period) becomes shorter as SCS becomes larger (wider). The SCS is not limited to the interval (frequency) illustrated in FIG. 3. For example, 480 kHz, 960 kHz, or the like may be used as SCS.

Further, the number of symbols constituting one slot may not necessarily be 14 symbols (e.g., 28 or 56 symbols). Further, the number of slots per subframe may be different depending on SCS.

Note that the time direction (t) illustrated in FIG. 3 may be referred to as a time domain, symbol duration, symbol time, or the like. Further, the frequency direction may be referred to as a frequency domain, a resource block, a subcarrier, a bandwidth part (BWP), or the like.

### <Analysis>

In 3GPP, it was determined to discuss, on repeaters, techniques such as beam control, timing control, ON/OFF control of power in DL-UL.

However, in 3GPP, it has only been determined that these techniques will be discussed, and no specific discussion has been made. For example, no specific discussion has been made in 3GPP on how the downlink transmission beam of repeater 13 is controlled based on the network such as base station 12 in FIG. 1.

Note that, in the following description, a downlink transmission beam may be referred to as a beam, DL Tx beam, Tx beam, DL beam, or the like. Further, transmission by a repeater may be referred to as forwarding. For example, a transmission beam may be referred to as a forwarding beam.

### <Proposal Overview>

In the present disclosure, the following Proposals 1 to 8 will be described regarding control of a DL Tx beam in a repeater.

(Proposal 1): A repeater controls a DL Tx beam based on Side Control Information (SCI).
(Proposal 2): A terminal performs a measurement using a DL Tx beam of the repeater.
(Proposal 3): A base station indicates a DL Tx beam of the repeater per time unit using beam information of the base station.
(Proposal 4): A base station indicates a DL Tx beam of the repeater per DL RS resource of the base station using beam information of the base station. Note that the RS is an abbreviation for Reference Signal.
(Proposal 5): A base station indicates a DL Tx beam of the repeater per time unit using a transmission beam information of the repeater.
(Proposal 6): A base station indicates a DL Tx beam per RS resource defined (newly defined) for a DL Tx beam of the repeater.
(Proposal 7): A base station indicates a transmission beam of the repeater using beam information of the base station.
(Proposal 8): A repeater uses a mechanism of an RS measurement method and a reporting method in the terminal.

Note that the SCI is information indicated from the network to the repeater. The SCI is received and processed by the repeater. In other words, the repeater is controlled by the network through SCI.

The SCI may be indicated from the base station to the repeater by lower layer signaling of L1/L2 such as an SSB (SS/PBCH Block), CSI-RS, PDCCH (DCI), PDSCH, or MAC CE, for example. The SCI may be indicated from the base station to the repeater by higher layer signaling such as an RRC parameter. Note that the SS is an abbreviation for Primary Synchronization Signal (PSS) and Secondary Synchronization Signal (SSS). The PBCH is an abbreviation for Physical Broadcast Channel. The CSI is an abbreviation for Channel State Information. The RS is an abbreviation for Reference Signal. The PDCCH is an abbreviation for Physical Downlink Control Channel. The DCI is an abbreviation for Downlink Control Information. The PDSCH is an abbreviation for Physical Downlink Shared Channel. The MAC CE is an abbreviation for Medium Access Control Control Element.

### <Proposal 1> A repeater controls a DL Tx beam based on SCI (using SCI).

The DL Tx beam control by the repeater may include three types of Type 0 to Type 2.

### <Proposal 1-Type 0>

The function of DL Tx beam control of a repeater is implementation-dependent.

In this case, enhancement of a capability report is considered on the repeater. For example, the repeater (the repeater in which the DL Tx beam control is implemented) indicates to the base station that the repeater has the DL Tx beam capability. For example, the repeater reports to the base station the presence or absence of capability of the DL Tx beam control, such as the number of DL Tx beams.

### <Proposal 1-Type 1>

In Proposal 1-Type 1, beam information of the base station is used as SCI. In other words, in Proposal 1-Type 1, the beam information such as a beam ID (identifier) of the base station is indicated from the base station to the repeater for the control of the DL Tx beam in the repeater.

The repeater controls (determines) a DL Tx beam based on beam information such as a beam ID of the base station indicated from the base station. Thus, a DL Tx beam of the repeater is associated with the DL Tx beam of the base station. For example, the DL Tx beam of the repeater is indicated based on a mapping rule (mapping table) between the DL Tx beam of the base station and the DL Tx beam of the repeater.

The repeater determines a DL Tx beam to transmit (forward) a DL signal received from the base station to the terminal with reference to the mapping rule.

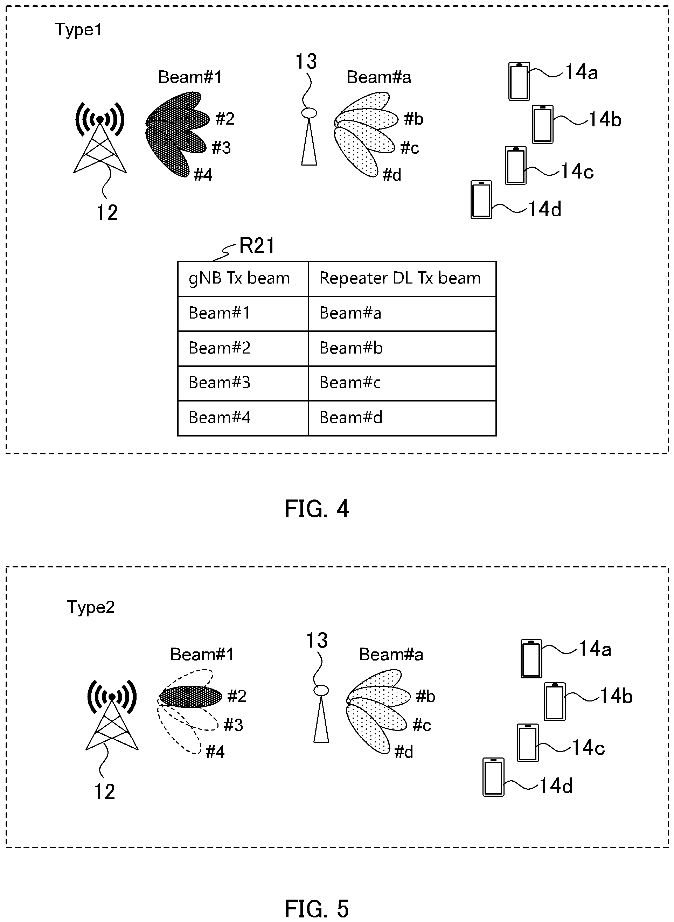

FIG. 4 illustrates an example of Proposal 1-Type 1. FIG. 4 illustrate base station 12, repeater 13, and terminals 14 (14a to 14d) described in FIG. 1. In addition, FIG. 4 illustrates mapping rule R21.

Mapping rule R21 is information in which DL Tx beams of base station 12 and DL Tx beams of repeater 13 are associated with each other. For example, as illustrated in FIG. 4, mapping rule R21 associates beam ID "#1" of the DL Tx beam in base station (gNB) 12 with beam ID "#a" of the DL Tx beam in repeater 13.

Note that, in the following description, beam ID "#1" may be simply referred to as beam #1. Similarly, the word "ID" is omitted for other beam IDs such as #2 and #a (e.g., simply referred to as beam #2 and beam #a).

An operation example of a radio system in FIG. 4 will be described. Base station 12, for example, determines (grasps) through which beam of repeater 13 terminal 14 receives a DL signal in a predetermined process such as initial access. For example, base station 12 determines that terminal 14a receives a DL signal through beam #a of repeater 13. Base station 12 determines that terminal 14b receives a DL signal through beam #b of repeater 13. Base station 12 determines that terminal 14c receives a DL signal through beam #c of repeater 13. Base station 12 determines that terminal 14d receives a DL signal through beam #d of repeater 13.

Here, for example, base station 12 schedules DL transmission to terminal 14a. As described above, terminal 14a receives a DL signal from repeater 13 through beam #a. Thus, base station 12 refers to mapping rule R21 and transmits a DL signal to repeater 13 using beam #1 corresponding to beam #a (by indicating beam #1 to repeater 13).

Repeater 13 refers to mapping rule R21 based on the received DL signal of beam #1, and transmits (forwards) the DL signal transmitted from base station 12 to terminal 14a using beam #a corresponding to beam #1.

Further, for example, base station 12 schedules DL transmission to terminal 14b. As described above, terminal 14b receives a DL signal from repeater 13 through beam #b. Thus, base station 12 refers to mapping rule R21, and transmits the DL signal to repeater 13 using beam #2 corresponding to beam #b.

Repeater 13 refers to mapping rule R21 based on the received DL signal of beam #2, and transmits (forwards) the DL signal transmitted from base station 12 to terminal 14a using beam #b corresponding to beam #2.

As described above with reference to FIG. 4, the repeater refers to the mapping rule and controls the DL Tx beam based on the beam information indicated from the base station, such as a beam ID of the base station. Therefore, the repeater can appropriately control the beam of the DL signal to be transmitted to the terminal.

### <Proposal 1-Type 1-Other 1>

The repeater may report the number of DL Tx beams to the base station as a capability of the repeater. The base station may indicate the beam ID to the repeater based on the capability of the repeater indicated from the repeater.

### <Proposal 1-Type 1-Other 2>

The mapping rule may be implemented in advance in the repeater (e.g., stored in a storage device). Further, the mapping rule may be indicated from the base station to the repeater with SCI.

### <Proposal 1-Type 1-Other 3>

The mapping rule may be reported from the repeater to the base station. For example, the repeater may associate the beam (information) of the repeater with the beam (information) of the base station, and report the associated mapping rule to the base station.

### <Proposal 1-Type 1-Other 4>

In the mapping rule, the beam information of the base station and the beam information of the repeater are associated with each other, but the present disclosure is not limited thereto. The beam information of the repeater in the mapping rule may be associated with a DL RS resource ID of the base station. For example, the beam information such as a beam ID of the repeater may be associated with an SSB/CSI-RS resource ID of the base station. Further, the beam information such as a beam ID of the repeater may also be associated with a Transmission Configuration Indication (TCI) state ID (TCI state ID) of the base station.

Note that the TCI state is information on a Quasi-Co-Location (QCL) of at least one of a signal and a channel (hereinafter, referred to as signal/channel), and may also be referred to as a spatial reception parameter, spatial relation info, or the like. The TCI state may be configured per channel or per signal to the terminal.

The TCI state may be, for example, information on a QCL between a target channel (or RS for the channel) and another signal (e.g., another Downlink Reference Signal (DL-RS)). The TCI state may be configured (indicated) by higher layer signaling, physical layer signaling, or a combination thereof.

The QCL is an index indicating a statistical characteristic of a signal/channel. For example, in the case that a certain signal/channel and another signal/channel are in a QCL relation, it may mean that at least one of a doppler shift, a doppler spread, an average delay, a delay spread, and/or a Spatial parameter (e.g., Spatial Rx Parameter) can be assumed to be the same (QCL on at least one of them) between the plurality of different signals/channels.

In NR, controlling reception processing of a signal/channel (e.g., at least one of reception, demapping, demodulation, and/or decoding) based on the TCI state is considered. The terminal may determine at least one of a transmission beam (Tx beam) and a reception beam (Rx beam) of the signal/channel based on the TCI state or the QCL assumption of the signal/channel.

### <Proposal 1-Type 1-Other 5>

The base station may indicate a time unit of a DL Tx beam of the base station using SCI. In other words, the repeater may receive indication of a time unit of a DL Tx beam from the base station using SCI. The time unit may be a subframe, a slot, a mini-slot, a symbol, a plurality of subframes, a plurality of slots or a plurality of symbols.

### <Proposal 1-Type 1-Other 6>

A DL Tx beam of the repeater in a time unit may be determined based on the DL Tx beam of the base station and the mapping rule. For example, the mapping rule is mapping rule R21 illustrated in FIG. 4. It is assumed that the DL Tx beam of the base station in a certain slot (time unit) is beam #2. In this case, the DL Tx beam of the repeater in a certain slot (time unit) is beam #b.

### <Proposal 1-Type 1-Other 7>

In the mapping rule, different DL Tx beams of the base station correspond to different DL Tx beams of the repeaters. DL Tx beam IDs of the base station used for the mapping rule may be the same as or different from (may be defined separately from) DL Tx beam IDs of the base station. Whether the DL Tx beam IDs of the base station used for the mapping rule are the same as or different from the DL Tx beam IDs of the base station may depend on the implementation of the base station.

### <Proposal 1-Type 1-Other 8>

The beam of the repeater may depend on the implementation of the repeater. For example, the repeater may apply the same (directional) beam when the same beam ID is indicated from the base station in two time units. The repeater may apply different (directional) beams when different beam IDs are indicated from the base station in two time units.

### <Proposal 1-Type 1-Other 9>

Beam control in the repeater may be applied to a DL channel such as an SSB, an SCI-RS, a PDCCH, a PDSCH, and a DMRS. Note that the DMRS is an abbreviation for Demodulation Reference Signal.

### <Proposal 1-Type 2>

In Proposal 1-Type 2, the beam information of the repeater is used as SCI. In other words, in Proposal 1-Type 2, the beam information such as a beam ID of the repeater is indicated from the base station for the control of the DL Tx beam in the repeater.

The repeater controls (determines) a DL Tx beam based on the beam information such as a beam ID of the repeater indicated from the base station. Therefore, the mapping rule described in Proposal 1-Type 1 is not necessary in Proposal 1-Type 2.

FIG. 5 illustrates an example of Proposal 1-Type 2. FIG. 5 illustrates base station 12, repeater 13, and terminals 14 (14a to 14d) described in FIG. 4.

Similarly to the description of FIG. 4, for example, base station 12 determines (grasps) through which beam of repeater 13 terminal 14 receives a DL signal in a predetermined process such as initial access. For example, base station 12 determines that terminal 14a receives a DL signal through beam #a of repeater 13. Base station 12 determines that terminal 14b receives a DL signal through beam #b of repeater 13. Base station 12 determines that terminal 14c receives a DL signal through beam #c of repeater 13. Base station 12 determines that terminal 14d receives a DL signal through beam #d of repeater 13.

Base station 12 communicates with repeater 13 (transmits a DL signal) using one beam among beams #1 to #4 of base station 12. For example, as illustrated in FIG. 4, base station 12 communicates with repeater 13 using beam #2 with the best communication quality among beams #1 to #4 of base station 12.

Here, for example, base station 12 schedules DL transmission to terminal 14a. As described above, terminal 14a receives a DL signal from repeater 13 through beam #a. Thus, base station 12 indicates beam #a to repeater 13 using SCI when transmitting the DL signal to terminal 14a through repeater 13.

Repeater 13 transmits the DL signal received from base station 12 to terminal 14a using beam #a indicated from base station 12.

Also, for example, base station 12 schedules DL transmission to terminal 14b. As described above, terminal 14b receives a DL signal from repeater 13 through beam #b. Thus, base station 12 indicates beam #b to repeater 13 using SCI when transmitting the DL signal to terminal 14b through repeater 13.

Repeater 13 transmits the DL signal received from base station 12 to terminal 14b using beam #b indicated from base station 12.

As described above with reference to FIG. 5, the repeater controls a DL Tx beam based on the beam information such as a beam ID of the repeater indicated from the base station. Therefore, the repeater does not need to store information such as a mapping rule in the storage device, which results in reducing the cost.

### <Proposal 1-Type 2-Other 1>

The repeater may report the number of DL Tx beams to the base station as a capability of the repeater. The base station may indicate a beam ID to the repeater based on the capability of the repeater indicated from the repeater.

### <Proposal 1-Type 2-Other 2>

The base station may indicate a time unit of a DL Tx beam of the repeater using SCI. In other words, the repeater may receive indication of a time unit of a DL Tx beam of the repeater from the base station using SCI.

### <Proposal 1-Type 2-Other 3>

The DL Tx beam of the repeater in a time unit may be directly determined based on the DL Tx beam of the repeater indicated by the base station. In other words, the repeater may determine a DL Tx beam in a time unit based on the indication from the base station.

### <Proposal 1-Type 2-Other 4>

The beam of the repeater may depend on the implementation of the repeater. For example, the repeater may apply the same (directional) beam when the same beam ID is indicated from the base station in two time units. The repeater may apply different (directional) beams when different beam IDs are indicated from the base station in two time units.

### <Proposal 1-Type 2-Other 5>

Beam control in the repeater may be applied to a DL channel such as an SSB, an SCI-RS, a PDCCH, a PDSCH, and a DMRS.

### <Proposal 2>

A terminal performs a measurement based on a DL Tx beam of the repeater. The terminal indicates the measurement result to the base station. This operation allows the base station to determine (grasp) the quality of the DL Tx beam of the repeater in the terminal.

Note that the measurement means that the terminal receives a detection/measurement signal (e.g., PSS, SSS, Cell-specific Reference Signal (CRS), CSI-RS, or the like), finds the detection/measurement signal, and measures the reception quality, for example. The reception quality includes, for example, Reference Signal Received Power (RSRP), Reference Signal Received Quality (RSRQ), Signal to Interference plus Noise Ratio (SINR), and the like. The measurement result may be referred to as a measurement report (measurement report) or simply a report.

Proposal 2 may include the following Options 1 to 5.

In Options 1 and 2, the operation of Type 1 described in Proposal 1 is assumed in the measurement. For example, the base station may indicate a DL Tx beam to the repeater using different beam information of the base station. The base station transmits an RS per time unit or per RS resource configured in Options 1 and 2 described below, and determines which RS the terminal has measured based on a report from the terminal.

(Option 1): The base station indicates a beam of the repeater per time unit (see also Proposal 3).

(Option 2): The base station indicates a beam of the repeater per DL RS resource of the base station (see also Proposal 4).

In Options 3 to 5, the operation of Type 2 described in Proposal 1 is assumed in the measurement. For example, the base station may indicate a DL Tx beam to the repeater using different beam information of the repeater. The base station transmits an RS per time unit or per DL RS resource configured in Options 3 to 5 described below, and determines which RS the terminal has measured based on a report from the terminal.

(Option 3): The base station indicates a beam of the repeater per time unit (see also Proposal 5).

(Option 4): Define a DL RS resource for controlling a DL Tx beam of the repeater. The base station indicates a beam of the repeater per DL RS resource using the defined DL RS resource (see also Proposal 6).

(Option 5): The base station indicates a beam of the repeater using the beam information of the base station (see also Proposal 7).

### <Proposal 2-Option 1>

The base station indicates a beam per time unit in the operation of Proposal 1-Type 1. The repeater receives indication of the beam per time unit in the operation of Proposal 1-Type 1.

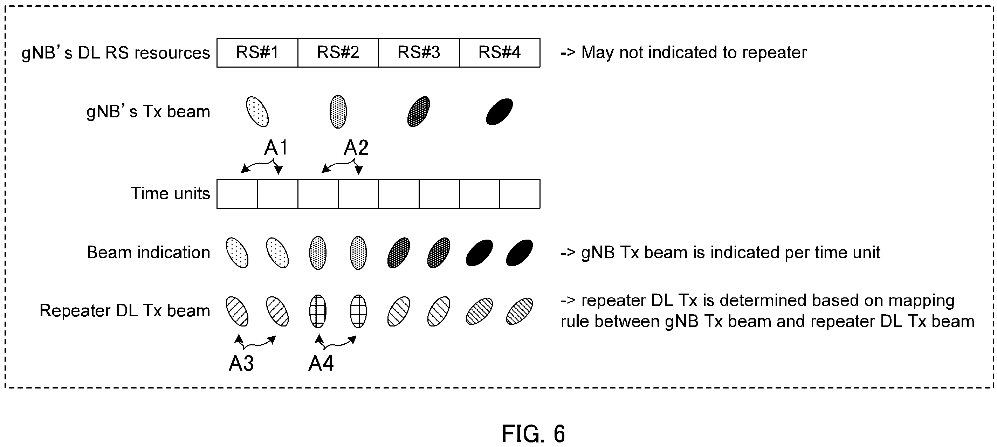

FIG. 6 illustrates an example of Proposal 2-Option 1. The "gNB's DL RS resources" illustrated in FIG. 6 indicates DL RS resources of the base station (gNB). In the example of FIG. 6, one DL RS resource is allocated in two time units. The DL RS resource configuration of the base station need not be indicated (indicated) to the repeater. Note that the DL RS resource may be, for example, a resource of an SSB/CSI-RS.

The "gNB's Tx beam" in FIG. 6 indicates DL Tx beams of the base station. The base station transmits, for example, four DL RSs (RS #1 to RS #4) using different DL Tx beams. Each of DL RSs may be transmitted using a plurality of time units. For example, RS #1 may be transmitted using two time units indicated by arrow A1. For example, RS #2 may be transmitted using two time units indicated by arrow A2.

As illustrated in "Beam indication" in FIG. 6, the base station indicates the beam information such as a beam ID of the base station to the repeater per time unit.

For example, the base station indicates beam #1, which is the beam ID of the base station, to the repeater in each of the two time units indicated by arrow A1 in FIG. 6. For example, the base station indicates beam #2, which is the beam ID of the base station, to the repeater in each of the two time units indicated by arrow A2 in FIG. 6.

As described in Proposal 1-Type 1, the repeater includes a mapping rule. The repeater refers to the mapping rule and determines a DL Tx beam for transmitting a DL RS based on the beam information indicated from the base station.

For example, the repeater refers to mapping rule R21 illustrated in FIG. 4 and determines beam #a of the repeater corresponding to beam #1 of the base station in each of the two time units indicated by arrow A1 in FIG. 6 (see the beams indicated by arrow A3 in FIG. 6). For example, the repeater determines beam #b of the repeater corresponding to beam #2 of the base station in each of the two time units indicated by arrow A2 in FIG. 6 (see the beams indicated by arrow A4 in FIG. 6).

The terminal measures a DL RS transmitted from the repeater using a legacy procedure (e.g., existing procedure). For example, the terminal measures L1 beams on the four DL RS resources illustrated in FIG. 6. Further, the terminal measures an L1 beam in each of the time units illustrated in FIG. 6. The terminal reports the measurement of the L1 beam measurement to the base station through repeater 13.

The base station determines (grasps) the beam quality (communication quality) between the repeater and the terminal based on the measurement report from the terminal. The base station dynamically executes (determines) the scheduling of the terminal (DL) using a good beam of the repeater.

As described above, the repeater may control a DL Tx beam per time unit based on the beam information of the base station and transmit a DL RS to the terminal. The terminal may report the measurement of the beam of the repeater to the base station per time unit. This allows the repeater to transmit a DL signal to the terminal using a high quality beam.

### <Proposal 2-Option 2>

The base station indicates a beams per DL RS resource of the base station. The repeater receives indication of the beam per DL RS resource of the base station.

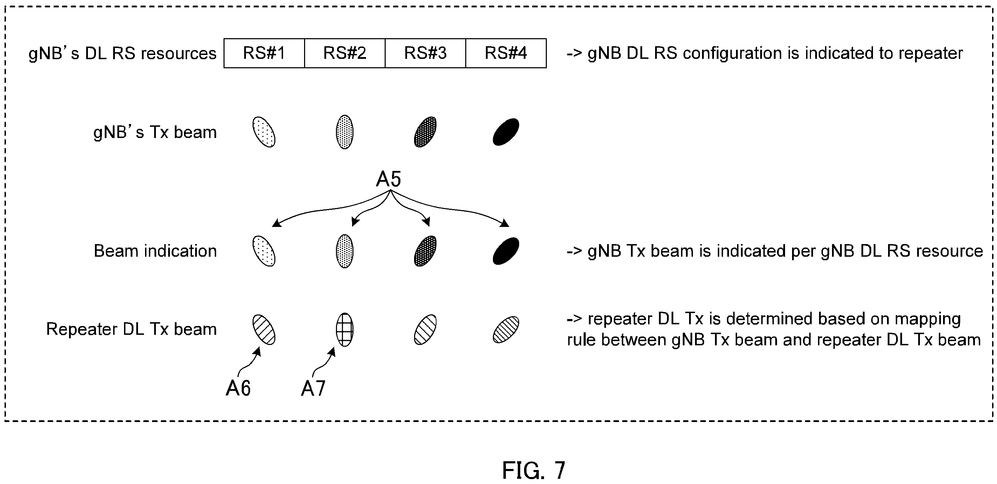

FIG. 7 illustrates an example of Proposal 2-Option 2. The "gNB's DL RS resources" in FIG. 7 indicates DL RS resources of the base station. The "gNB's Tx beam" in FIG. 7 indicates DL Tx beams of the base station. The base station transmits, for example, four DL RSs (RS #1 to RS #4) using different DL Tx beams. The base station indicates a DL RS resource configuration to the repeater.

As indicated by arrow A5 in FIG. 7, the base station, for example, indicates the beam information such as a beam ID of the base station to the repeater per DL RS resource.

For example, the base station indicates beam #1 to the repeater in the DL RS resource of RS #1 illustrated in FIG. 7. For example, the base station indicates beam #2 to the repeater in the DL RS resource of RS #2 illustrated in FIG. 7.

As described in Proposal 1-Type 1, the repeater includes a mapping rule. The repeater refers to the mapping rule and determines a DL Tx beam for transmitting a DL RS based on the beam information indicated from the base station. At this time, the repeater determines a DL Tx beam in each DL RS resource configuration (DL RS resource unit) indicated from the base station.

For example, in the DL RS resource (section) of RS #1 illustrated in FIG. 7, the repeater determines beam #a of the repeater corresponding to beam #1 of the base station, referring to mapping rule R21 illustrated in FIG. 4 (see the beam indicated by arrow A6 in FIG. 7). For example, in the DL RS resource (section) of RS #2 illustrated in FIG. 7, the repeater determines beam #b of the repeater corresponding to beam #2 of the base station, referring to mapping rule R21 illustrated in FIG. 4 (see the beam indicated by arrow A7 in FIG. 7).

The terminal measures the DL RS transmitted from the repeater using a legacy procedure. For example, the terminal measures L1 beams on the four DL RS resources #1 to #4 illustrated in FIG. 7. The terminal reports the measurement of the L1 beam measurement to the base station through repeater 13.

The base station determines (grasps) the beam quality (communication quality) between the repeater and the terminal based on the measurement report from the terminal. The base station dynamically executes (determines) the scheduling of the terminal (DL) using a good beam of the repeater. The base station may schedule the terminal per time unit.

As described above, the repeater may transmit a DL RS to the terminal by controlling a DL Tx beam per DL RS resource based on the beam information of the base station. The terminal may report the measurement of the beam of the repeater to the base station per DL RS resource. This allows the repeater to transmit a DL signal to the terminal using a high quality beam.

### <Proposal 2-Option 3>

The base station indicates a beam per time unit in the operation of Proposal 1-Type 2. The repeater receives indication of the beam per time unit in the operation of Proposal 1-Type 2.

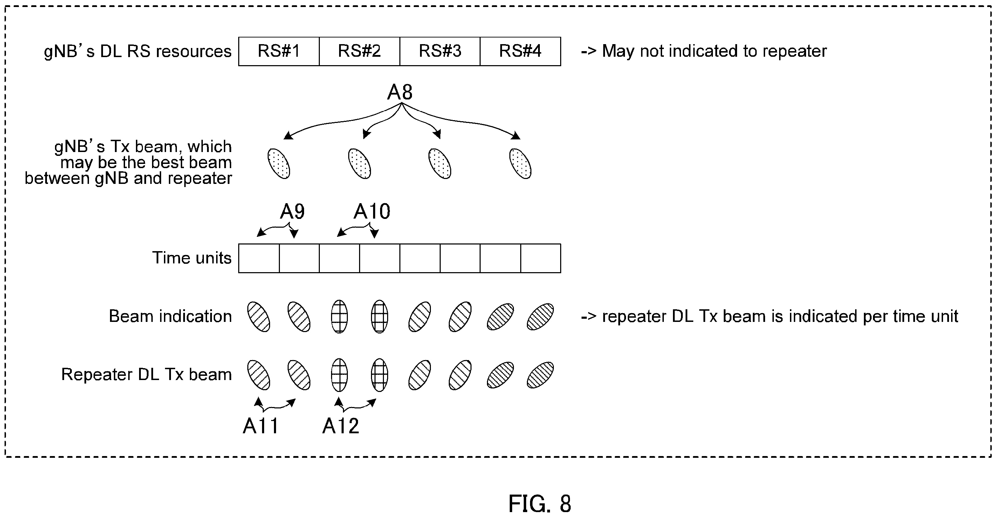

FIG. 8 illustrates an example of Proposal 2-Option 3. The "gNB's DL RS resources" illustrated in FIG. 8 indicates DL RS resources in the base station. In the example of FIG. 8, one DL RS resource is allocated to two time units. A DL RS resource configuration of the base station need not be indicated to the repeater.

FIG. 8 illustrates DL Tx beams of the base station. The base station transmits, for example, four DL RSs (RS #1 to RS #4) using one (directed) DL Tx beam among a plurality of DL Tx beams (see arrow A8 in FIG. 8). For example, the base station may transmit a DL RS using a DL Tx beam with the best communication quality between the base station and the repeater among the plurality of DL Tx beams.

As illustrated in "Beam indication" in FIG. 8, the base station indicates to the repeater the beam information such as a beam ID of the repeater per time unit.

For example, the base station indicates beam #a, which is the beam ID of the repeater, to the repeater in each of the two time units indicated by arrow A9 in FIG. 8. For example, the base station indicate beam #b, which is the beam ID of the repeater, to the repeater in each of the two time units indicated by arrow A10 in FIG. 8.

As described in Proposal 1-Type 2, the base station indicates the beam information of the repeater to the repeater to control the DL Tx beam of the repeater in Proposal 1-Type 2. Therefore, the repeater does not include a mapping rule in Proposal 1-Type 2. The repeater determines a DL Tx beam for transmitting (forwarding) a DL RS based on the beam information of the repeater indicated from the base station.

For example, the repeater determines a DL Tx beam for transmitting a DL RS as illustrated as "Repeater DL Tx beam" in FIG. 8. For example, the repeater determines beam #a of the repeater in each of the two time units indicated by arrow A9 in FIG. 8 (see the beams indicated by arrow A11 in FIG. 8). For example, the repeater determines beam #b of the repeater in each of the two time units indicated by arrow A10 in FIG. 8 (see the beams indicated by arrow A12 in FIG. 8).

The terminal measures a DL RS transmitted from the repeater using a legacy procedure. For example, the terminal measures L1 beams on the four DL RS resources illustrated in FIG. 8. Further, the terminal measures an L1 beam in each of the time units illustrated in FIG. 8. The terminal reports the measurement of the L1 beam measurement to the base station through repeater 13.

The base station determines (grasps) the beam quality (communication quality) between the repeater and the terminal based on the measurement report from the terminal. The base station dynamically executes the scheduling of the terminal (DL) using a good beam of the repeater.

As described above, the repeater may control a DL Tx beam per time unit based on the beam information of the repeater and transmit a DL RS to the terminal. The terminal may report the measurement of the beam of the repeater to the base station per time unit. This allows the repeater to transmit a DL signal to the terminal using a high quality beam.

Note that the base station may indicate the plurality of pieces of beam information of the repeater in one time unit. In this case, the repeater may (simultaneously) transmit DL signals using a plurality of DL Tx beams in one time unit.

Further, the time unit may be configured for each of a plurality of frequency resources (per frequency resource domain unit). The base station may indicate the beam information of the repeater in the time unit of each of the plurality of frequency resources. In this case, the repeater may simultaneously transmit DL signals using a plurality of DL Tx beams in each of the plurality of frequency resources.

The above-described configuration of the time unit for each of the plurality of frequency resources may also be applied to other Options of Proposal 2. The above-described configuration of the time unit for each of the plurality of frequency resources may be applied to Proposals other than Proposal 2.

### <Proposal 2-Option 4>

Proposal 2-Option 4 defines a new RS resource for controlling a DL Tx beam of the repeater. The newly defined DL RS resource of the repeater may be referred to as a repeater DL RS resource. The repeater DL RS resource can be regarded as being defined to manage a DL Tx beam of the repeater.

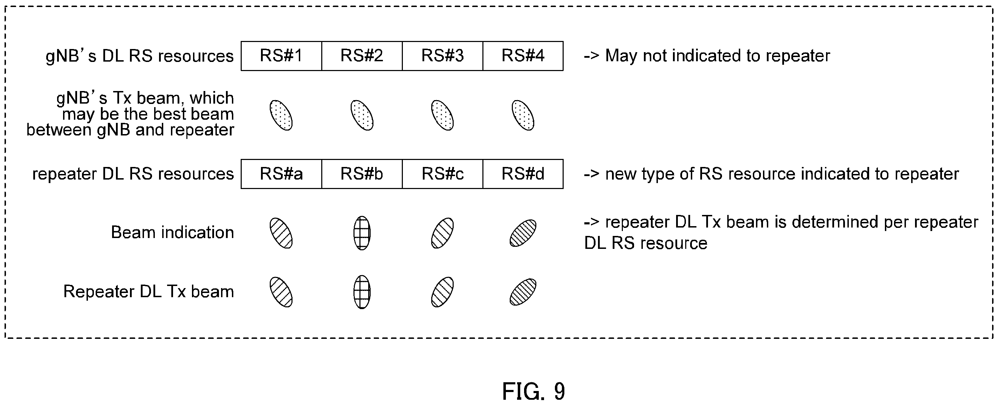

FIG. 9 illustrates an example of Proposal 2-Option 4. The "gNB's DL RS resources" illustrated in FIG. 9 indicates DL RS resources in the base station. The DL RS resources (configuration) in the base station need not be indicated to the repeater.

The "repeater DL RS resources" illustrated in FIG. 9 indicates repeater DL RS resources for the repeater. The repeater DL RS resources include the beam information of the repeater for controlling a DL Tx beam of the repeater.

The "Beam indication" illustrated in FIG. 9 refers to beam information for controlling a DL Tx beam of the repeater. The beam information for controlling a DL Tx beam of the repeater is determined per repeater DL RS resource. The repeater DL RS resource (configuration) is indicated from the base station to the repeater.

The base station configures a repeater DL RS resource and transmits the repeater DL RS including beam information of a DL Tx beam of the repeater per repeater DL RS resource. The base station uses one DL Tx beam among a plurality of DL Tx beams, and transmits, for example, four repeater DL RSs (RS #a to RS #d). For example, the base station may transmit repeater DL RSs using a DL Tx beam with the best communication quality between the base station and the repeater among the plurality of DL Tx beams.

The repeater that has received the repeater DL RS decodes the repeater DL RSs and obtains the beam information of the repeater. The repeater controls DL Tx beams based on the decoded beam information as illustrated as "Repeater DL Tx beam" in FIG. 9.

Each repeater DL RS resource occupies a particular time-domain resource indicated by the base station. The repeater amplifies a DL RS of the base station in each repeater DL RS resource and forward the DL RS to the terminal.

The terminal measures the DL RS transmitted from the repeater using a legacy procedure. For example, the terminal measures L1 beams on the four repeater DL RS resources illustrated in FIG. 9. The terminal reports the measurement of the L1 beam measurement to the base station through repeater 13.

The base station determines (grasps) the beam quality (communication quality) between the repeater and the terminal based on the measurement report from the terminal. The base station dynamically executes the schedule of the terminal (DL) using a good beam of the repeater. The base station may schedule the terminal per time unit.

As described above, the repeater may control a DL Tx beam per repeater DL RS resource and transmit a DL RS to the terminal. The terminal may report the measurement of the beam of the repeater to the base station per repeater DL RS resource. This allows the repeater to transmit a DL signal to the terminal using a high quality beam.

Note that, in Proposal 2-Option 4, the beam information of the repeater may be determined per repeater DL RS resource, but the present invention is not limited thereto. The beam information of the repeater may be indicated per repeater DL RS resource. Also, the repeater DL Tx beam may be determined per repeater DL RS resource or may be indicated per repeater DL RS resource.

### <Proposal 2-Option 5>

The base station indicates a beam of the repeater using beam information of the base station in Proposal 1-Type 2. The repeater determines a DL Tx beam using beam information of the base station without a mapping rule. The repeater determines a beam per DL RS resource of the base station.

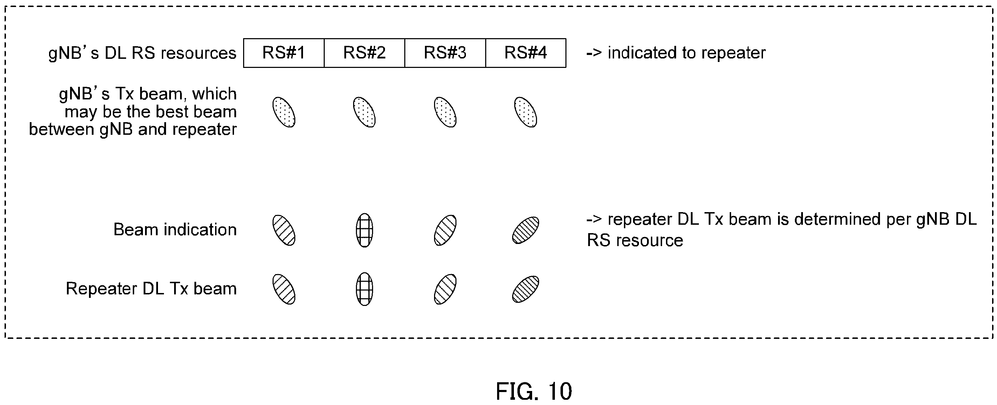

FIG. 10 illustrates an example of Proposal 2-Option 5. The "gNB's DL RS resources" illustrated in FIG. 10 indicates DL RS resources in the base station.

The base station transmits, for example, four DL RSs (RS #1 to RS #4) using one DL Tx beam among a plurality of DL Tx beams. For example, the base station may transmit a DL RS using a DL Tx beam with the best communication quality between the base station and the repeater among the plurality of DL Tx beams.

The base station indicates the beam information of the base station to the repeater in the DL RS of the DL RS resource. For example, as illustrated in "Beam indication" in FIG. 10, the base station may indicate the beam information of the base station to the repeater in the DL RS of the DL RS resource.

The repeater controls the DL Tx beam based on the beam information indicated from the base station. For example, the DL Tx beam is controlled as illustrated as "Repeater DL Tx beam" in FIG. 10. In other words, the repeater controls the DL Tx beam using the beam information of the base station.

The terminal measures the DL RS transmitted from the repeater using a legacy procedure. For example, the terminal measures L1 beams on the four DL RS resources illustrated in FIG. 10. The terminal reports the measurement of the L1 beam measurement to the base station through repeater 13.

The base station determines (grasps) the beam quality (communication quality) between the repeater and the terminal based on the measurement report from the terminal. The base station dynamically executes (determines) the scheduling of the terminal (DL) using a good beam of the repeater. The base station may schedule the terminal per time unit.

As described above, the repeater may transmit a DL RS to the terminal by controlling a DL Tx beam per DL RS resource based on the beam information of the base station. The terminal may report the measurement of the beam of the repeater to the base station per DL RS resource. This allows the repeater to transmit a DL signal to the terminal using a high quality beam.

### <Capability of Repeater in Proposals 1 and 2>

The repeater may transmit a repeater capability indicating a capability of the repeater to a network such as NG-RAN, for example. In response to receiving Repeater Capability Enquiry from the network, the repeater may transmit the repeater capability.

The repeater capability indicating the capability of the repeater may include the following information indicating the capability of the repeater. Note that the information indicating the capability of the repeater may correspond to the information defining the capability of the repeater.
- Information on the number of DL Tx beams processable by the repeater.
- Information indicating whether the repeater supports any of the frameworks of Type 0, Type 1, or Type 2 described in Proposal 1
- Information indicating whether the repeater can simultaneously forward DL signals using a plurality of DL Tx beams

In this case, the number of DL Tx beams available for the repeater to simultaneously forward DL signals may be defined as a repeater capability.
- Information indicating whether the repeater can simultaneously forward DL signals using different beams for resources in different frequency domains. In this case, the number of DL Tx beams available for the repeater to simultaneously forward DL signals may be defined as a repeater capability.

### <Proposal 3>

In Proposal 3, the operation of Type 1 described in Proposal 1 is assumed. A base station indicates a DL Tx beam of the repeater per time unit using beam information of the base station. Proposal 3 may include the following Options 1 to 8.

(Option 1): The base station indicates a plurality of pieces of continuous base station beam information (e.g., beam IDs of the base station).

(Option 2): The base station indicates one piece of base station beam information. In the repeater, the same beam information is continuously configured.

(Option 3): The base station periodically configures a plurality of pieces of continuous base station beam information.

(Option 4): The base station indicates one piece of base station beam information. In the repeater, the same beam information is configured continuously and periodically.

(Option 5): The base station uses a beam configuration (method) for an existing terminal. The repeater decodes the signal for the terminal.

(Option 6): The repeater refers to a TCI state of DCI 1_ x (x is a positive integer, e.g., 0 or 1). The repeater decodes DCI for the terminal.

(Option 7): Use a TCI state of configuration/activation of Semi Persistent Scheduling (SPS). Alternatively, the TCI state of configuration/activation of SPS is defined for the repeater.

(Option 8): The base station uses a TCI state of Rel-17 for indication of the base station beam information.

### <Proposal 3-Option 1>

The base station indicates a plurality of pieces of continuous base station beam information to the repeater. The repeater controls a DL Tx beam based on the plurality of pieces of continuous base station beam information.

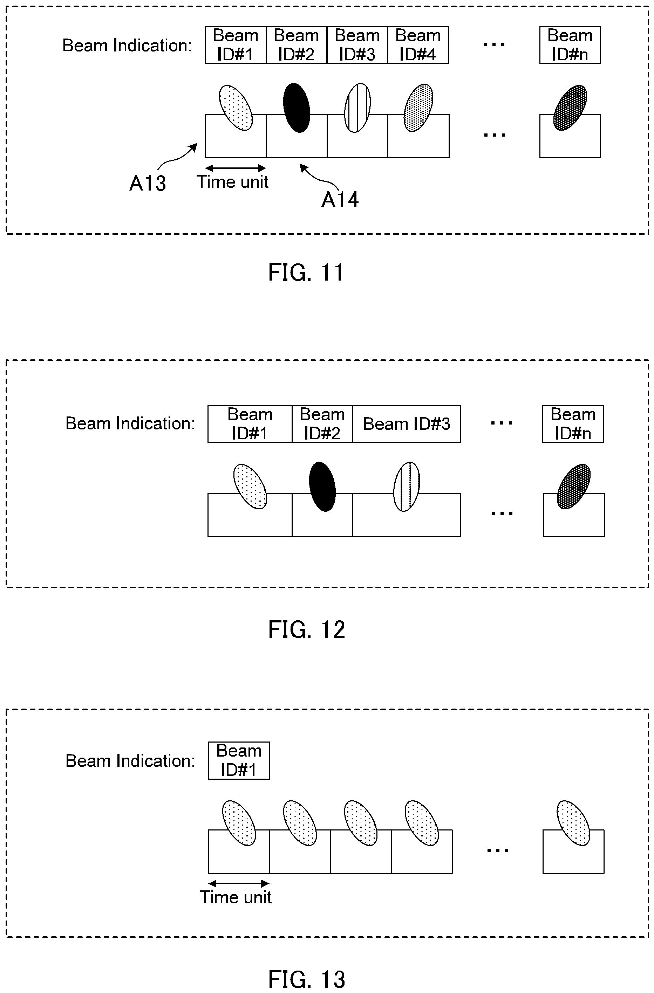

FIG. 11 illustrates an example of Proposal 3-Option 1. The "Beam Indication" in FIG. 11 refers to beam information indicated to the repeater by the base station. The beam information is, for example, a beam ID of the base station.

As illustrated in FIG. 11, a series of beam information of the base station is applied in a series of time units. The base station indicates different beam information per time unit. For example, the base station indicates beam #1 in the time unit indicated by arrow A13 in FIG. 11. For example, the base station indicates beam #2 in the time unit indicated by arrow A14 in FIG. 11.

FIG. 12 illustrates another example of Proposal 3-Option 1. In FIG. 12, the length of the time unit is different from that in FIG. 11. The length of the time unit illustrated in FIG. 11 is constant, but the length of the time unit illustrated in FIG. 12 is not constant. Note that, similarly to the description in FIG. 11, the base station indicates different beam information per time unit also in FIG. 12.

A sequence of time units to which beam control is applied may be indicated to the repeater as the number of consecutive time units. The sequence of time units to which beam control is applied may be indicated based on the start time and time length of the time units.

The start time or time length of the time units to which beam control is applied may be predefined. For example, the time units to which beam control is applied may start from a predefined offset from the reception of beam information, and range over a predefined length.

Further, the sequence of time units to which the beam control is applied may be indicated to the repeater using a sequence of time unit IDs. The beam information of the base station and the time unit may be associated with each other. For example, the beam ID of the base station and the time unit ID may be associated with each other.

### <Proposal 3-Option 2>

The base station indicates one piece of base station beam information to the repeater. In the repeater, the indicated one piece of beam information is continuously configured. In other words, the repeater continuously uses a DL Tx beam that is based on the indicated one piece of beam information.

FIG. 13 illustrates an example of Proposal 3-Option 2. The "Beam indication" in FIG. 13 refers to beam information indicated to the repeater by the base station. The beam information is, for example, a beam ID of the base station.

As illustrated in FIG. 13, the base station indicates beam information of the base station to the repeater in certain one time unit. For example, the base station indicates beam #1 to the repeater in certain one time unit.

The repeater continuously uses a DL Tx beam that is based on the indicated one piece of beam information. For example, the repeater uses a DL Tx beam that is based on the indicated one piece of beam information, over a plurality of time units. In the example in FIG. 13, the repeater uses a DL Tx beam that is based on beam ID "#1" of the base station, over a plurality of time units.

The sequence of time units to which beam control is applied may be indicated to the repeater as the number of consecutive time units. The sequence of time units to which beam control is applied may be indicated based on the start time and time length of the time units.

The start time or time length of the time units to which beam control is applied may be predefined. For example, the time units to which beam control is applied may start from a predefined offset from the reception of beam information, and range over a predefined length.

The sequence of time units to which the beam control is applied may be indicated to the repeater using a sequence of time unit IDs. The beam information of the base station and the time unit may be associated with each other. For example, the beam information of the base station and the time unit ID may be associated with each other. In this case, the base station can indicate, to the repeater, the sequence of the time units to which the beam control is applied by indicating the beam information of the base station.

### <Proposal 3-Option 3>

The base station periodically configures a plurality of pieces of continuous base station beam information. The repeater periodically controls DL Tx beams based on the plurality of pieces of continuous base station beam information indicated from the base station.

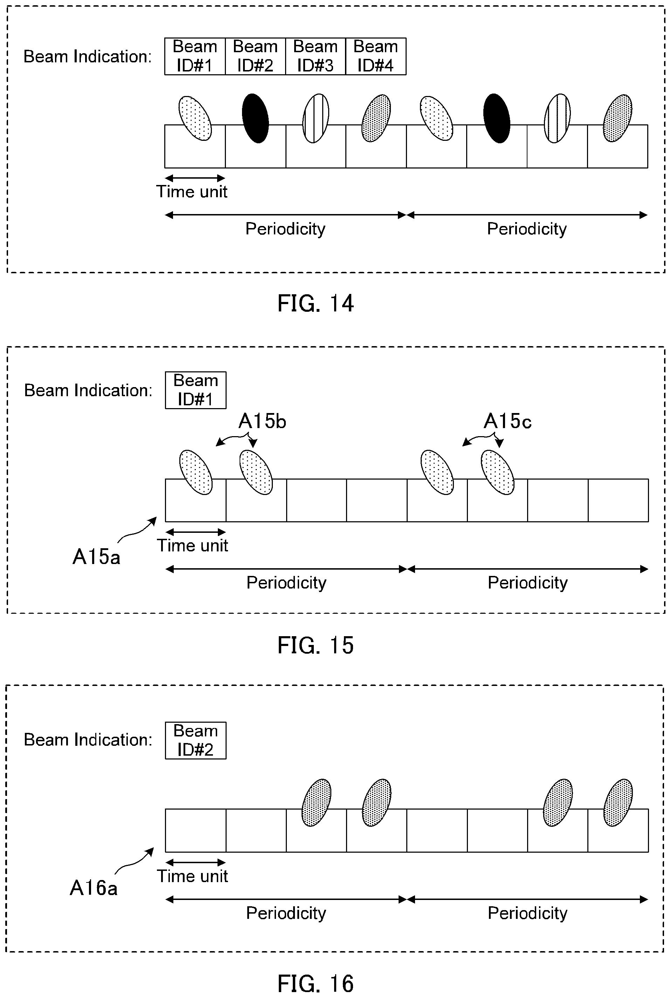

FIG. 14 illustrates an example of Proposal 3-Option 3. The "Beam Indication" in FIG. 14 refers to beam information indicated to the repeater by the base station. The beam information is, for example, a beam ID of the base station.

The base station indicates the beam information of the base station in one periodicity to the repeater. For example, as illustrated in FIG. 14, the base station indicates beam IDs "#1, #2, #3, and #4" of the base station to the repeater once, using all of the time units (four time units) in one periodicity.

Upon receiving beam IDs "#1, #2, #3, and #4" of the base station in one periodicity, the repeater periodically transmits DL Tx beams respectively corresponding to beam IDs "#1, #2, #3, and #4" of the base station. For example, the repeater repeatedly (periodically) transmits beam IDs "#a, #b, #c, and #d" respectively corresponding to beam IDs "#1, #2, #3, and #4" of the base station with reference to the mapping rule.

The base station may indicate, to the repeater, the periodic pattern of the beam information of the base station.

The base station may indicate, to the repeater, the periodicity of the beam information of the base station and the offset. The offset may indicate, for example, a time unit in which periodic transmission of DL Tx beam is started. The sequence of the beam information of the base station may be indicated by each beam information (e.g., "#1, #2, #3, #4") applied to time units in one periodicity.

### <Proposal 3-Option 4>

The base station indicates one piece of base station beam information. In the repeater, the same beam information is configured continuously and periodically.

FIG. 15 illustrates an example of Proposal 3-Option 4. The "Beam Indication" in FIG. 15 refers to beam information indicated to the repeater by the base station. The beam information is, for example, a beam ID of the base station.

The base station indicates the beam information of the base station in one periodicity to the repeater. For example, as indicated by arrow A15a in FIG. 15, the base station indicates beam ID "#1" of the base station to the repeater using some time units (one time unit) in one periodicity.

The repeater continuously uses a DL Tx beam that is based on the indicated one piece of beam information. For example, the repeater uses a DL Tx beam that is based on the indicated one piece of beam information, over some time units in one periodicity.

For example, as illustrated in arrow A15b in FIG. 15, the repeater uses a DL Tx beam that is based on the indicated one piece of beam information, over two time units among the four time units in one periodicity. For example, as illustrated in arrow A15c in FIG. 15, the repeater uses a DL Tx beam that is based on the indicated one piece of beam information, over two time units among the four time units in one periodicity.

The sequence of time units to which beam control is applied may be indicated to the repeater as the number of consecutive time units. The sequence of time units to which beam control is applied may be indicated based on the start time and time length of the time units.

The start time or time length of the time units to which beam control is applied may be predefined. For example, the time units to which beam control is applied may start from a predefined offset from the reception of beam information, and range over a predefined length.

The base station may indicate, to the repeater, the periodic pattern of the beam information of the base station

The base station may indicates, to the repeater, the periodicity of the beam information of the base station and the offset. The offset may indicate, for example, a time unit in which transmission of a DL Tx beam in one periodicity is started. Further, the number of time units (two in the case of FIG. 15) to which beam control is applied in one periodicity may be indicated to the repeater.

FIG. 16 illustrates another example of Proposal 3-Option 4. The "Beam Indication" in FIG. 16 refers to beam information indicated to the repeater by the base station. The beam information is, for example, a beam ID of the base station.

The base station indicates the beam information of the base station in one periodicity to the repeater. For example, as indicated by arrow A16a in FIG. 16, the base station indicates the beam ID "#2" of the base station to the repeater using some time units (one time unit) in one periodicity.

The repeater continuously uses a DL Tx beam that is based on the indicated one piece of beam information. For example, the repeater transmits a DL Tx beam that is based on the indicated one piece of beam information, over the third and fourth time units among the four time units in one periodicity based on the offset indicated from the base station.

The base station may control DL Tx beams of the repeater so that a plurality of DL Tx beams in the repeater do not overlap with each other.

For example, as illustrated in FIG. 15, the base station controls DL Tx beams of the repeaters so that the DL Tx beam corresponding to beams #1 is transmitted in the first and second time units in one periodicity. Further, as illustrated in FIG. 16, the base station controls DL Tx beams of the repeater so that the DL Tx beam corresponding to beam #2 is transmitted in the third and fourth time units in one periodicity.

The above-described operation allows the repeater to continuously transmit a plurality of DL Tx beams using a plurality of time units in one periodicity.

### <Proposal 3-Option 5>

The base station uses a beam configuration (method) for an existing terminal. The repeater decodes the signal for the terminal.

For example, the base station may use an existing beam configuration (indication) on a DL channel or a DL RS to a terminal (e.g., all terminals in a cell or group). For example, the base station may use an existing beam configuration (e.g., cell-specific RNTI or group-common RNTI) on a PDSCH, a PDCCH, an SSB, or a CSI-RS. Since the existing beam configurations are for terminals, the repeater decodes the DL channel or DL RS.

Note that the beam information of the base station may be indicated by a DL RS resource ID (CSI-RS ID or SSB index) or a TCI state ID of the base station.

### <Proposal 3-Option 6>

The repeater refers to a TCI state of DCI 11_x. The repeater decodes the DCI for the terminal.

For example, the base station uses DCI (DCI 1_x) that schedules a PDSCH and indicates the beam information to the repeater. The TCI state field of DCI indicates beam information such as a Tx beam ID of the base station. The beam information indicated to the repeater (Tx beam ID of the base station) and the DL Tx beam of the repeater corresponding to the beam information are applied to a slot or symbol indicated in a DCI Time Domain Resource Allocation (TDRA) field.

The repeater need not decode a PDSCH sometimes. In this case, the repeater may simply amplify and forward the DL signal.

For example, the repeater receives DCI 1_x. In this case, when the base station indicates, to the terminal, forwarding of only a DL signal to the terminal, the repeater need not decode a PDSCH. The repeater (Mobile Termination (MT) function of repeater) need not decode or process a PDSCH of the resource indicated by DCI by the following method.

(Method 1): When a predefined value is configured in one or more existing fields (or new field) of DCI, the repeater forwards only a DL signal from the base station to the terminal in the slot or symbol indicated by DCI. The repeater does not decode or process a PDSCH of the resource indicated by DCI.

(Method 2): When detecting DCI in a particular RNTI, search space (SS) set, or control-resource set (CORESET), the repeater forwards only a DL signal from the base station to the terminal in the slot or symbol indicated by DCI. The repeater does not decode or process a PDSCH of the resource indicated by DCI.

As an alternative to the above-described methods 1 and 2, a new DCI format may be introduced.

For example, the new DCI format includes a field similar to a TCI state field of DCI 1_x. This field indicates beam information of the base station.

Further, the new DCI format includes a field similar to a TDRA field of DCI 1_x. This field indicates an applicable time (e.g., slot offset and symbol position in the slot) for the beam information of the base station indicated to the repeater.

### <Proposal 3-Option 7>

Use a TCI state of configuration/activation of SPS. Alternatively, a TCI state of configuration/activation of SPS is defined for the repeater.

A PDSCH of SPS is configured by an RRC parameter such as SPS-Config. Transmission of a PDSCH of SPS is activated and deactivated/released by DCI (activation DCI).

For example, the base station uses activation DCI of SPS and indicates the beam information to the repeater. The TCI state field of the activation DCI of SPS indicates beam information such as a Tx beam ID of the base station. Beam information (Tx beam ID of the base station) indicated to the repeater and a DL Tx beam of the repeater corresponding to the beam information are applied to the slot or symbol indicated in a configuration (RRC parameter) of SPS or a TDRA field of activation DCI of SPS.

For example, the configuration of SPS may indicate periodicity of beam information. The TDRA field of activation DCI of SPS may indicate a slot offset of a DL Tx beam in the repeater or a symbol position in the slot.

The repeater need not decode a PDSCH sometimes. In this case, the repeater may simply amplify and forward the DL signal.

For example, the repeater receives an SPS configuration (RRC parameter) or activation DCI. In this case, when the base station indicates, to the terminal, forwarding of only a DL signal to the terminal, the repeater need not decode a PDSCH.

For example, the repeater forwards only a DL signal from the base station to the terminal in the slot or symbol indicated in activation DCI (TDRA) when a predefined value is set in one or more existing fields (or new field) of a SPS configuration or activation DCI. The repeater does not decode or process a PDSCH of the resource indicated by activation DCI.

Further, a new RRC configuration or DCI similar to the SPS configuration or activation DCI may be introduced.

For example, the new RRC configuration or DCI includes a field similar to the TCI state field of activation DCI. This field indicates beam information of the base station.

Further, the new RRC configuration or DCI includes a field similar to the field in which SPS periodicity of the SPS configuration is configured. This field indicates an applicable time (e.g., slot offset and symbol position in the slot) for the beam information of the base station indicated to the repeater.

The new RRC configuration or DCI includes a field similar to a TDRA field of activation DCI. This field indicates a slot or symbol for controlling a DL Tx beam of the repeater.

### <Proposal 3-Option 8>

The base station uses a TCI state of Rel-17 for indicating beam information.

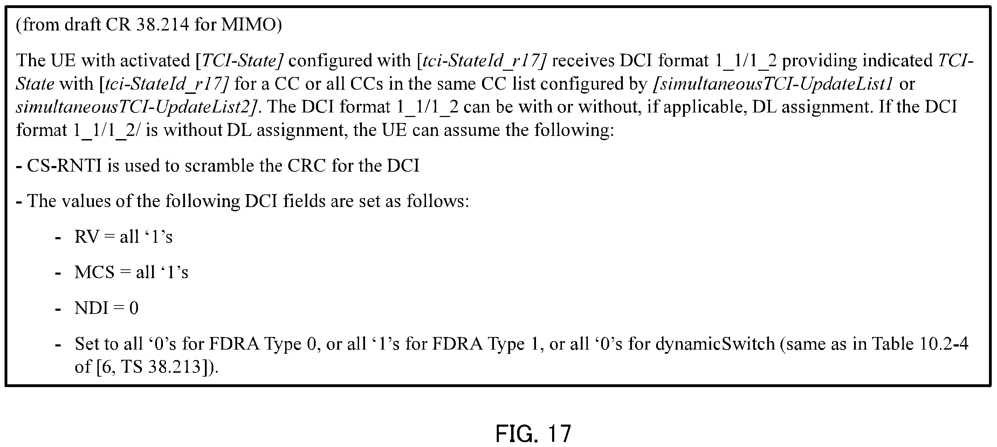

In Rel-17, unified TCI state indication DCI is defined as shown in FIG. 17. The TCI state field of unified TCI state indication DCI of Rel-17 indicates beam information such as a Tx-beam ID of the base station. The base station indicates the beam information of the base station to the repeater using the unified TCI state indication DCI of Rel-17.

The beam information (Tx beam ID of the base station) indicated to the repeater and a DL Tx beam of the repeater corresponding to the beam information may be started at least from the first symbol/slot in the X slot/X symbol after the last slot/symbol of the PUCCH transmitting HARQ-ACK for the DCI.

Alternatively, the beam information indicated to the repeater and a DL Tx beam of the repeater corresponding to the beam information may be started at least from the first symbol/slot in the X slot/X symbol after the slot/symbol in which the DCI is received.

Note that the X may be a target for a predefinition, configuration, or repeater function.

In addition, a new DCI format may be introduced to indicate the beam information of the base station to the repeater.

For example, the new DCI format include a field similar to the TCI state field of unified TCI state indication DCI of Rel-17. This field indicates beam information of the base station. This field also indicates an applicable time for the beam information (e.g., slot offset and symbol position in the slot).

### <Proposal 3-Variation>

In each option of Proposal 3, a plurality of pieces of beam information of the base station may be indicated per time unit.

In each option of Proposal 3, the time unit may be configured for each of a plurality of frequency resources (per frequency resource domain unit). The base station may indicate the beam information of the base station in a time unit of each of the plurality of frequency resources. In this case, the repeater may simultaneously use a plurality of DL Tx beams in each of the plurality of frequency resources to transmit DL signals.

### <Proposal 4>

In Proposal 4, the operation of Type 1 described in Proposal 1 is assumed. A base station indicates a DL Tx beam of the repeater per DL RS resource of the base station using beam information of the base station.
Proposal 4 may include the following Options 1 and 2.

(Option 1): The repeater decodes an RS for the terminal and obtains beam information of the base station.

(Option 2): The base station indicates beam information to the repeater using the same method as the RS for the existing terminal.

### <Proposal 4-Option 1>

As described in Proposal 2-Option 2, the base station indicates a beam per DL RS resource of the base station. The DL RS resource (RS) of the base station may be for terminals. Then, the repeater decodes the RS for terminals and obtains the beam information of the base station.

For example, the repeater decodes a DLRS (e.g., SSB/CSI-RS) configuration, DL RS activation, or DL RS triggering for a terminal, and obtains information on the DL RS resource of the base station and the beam information of the base station used in each DL RS resource. The repeater controls a DL Tx beam using the obtained beam information.

Note that the repeater may decode only a DL RS configuration, DL RS activation or DL RS triggering of the base station in all terminals in the cell or group. (i.e., cell-specific or group-specific DL RS). For example, the repeater may decode a DL RS resource of the base station using cell-specific RNTI or group-common RNTI.

### <Proposal 4-Option 2>

The base station uses the existing signaling in a DL RS configuration, DL RS activation or DL RS triggering of the base station and the existing signaling of a beam indication in DR SR for the terminal; and indicates, to the repeater, the information of the DL RS resource of the base station and the beam information of the base station used in each DL RS resource. Proposal 4-Option 2 may include the following Variations 1 and 2.

(Variation 1): When using a DL RS resource of the base station, the base station may indicate to the repeater that decoding a DL RS resource is not necessary. The base station may indicate amplifying and forwarding of a DL signal to the repeater.

(Variation 2): The base station may indicate, to the repeater, beam information and a time-domain resource, considering a case where the repeater does not need to decode a DL RS of the base station. The time-domain resource may include periodic/semi-persistent/aperiodic time-domain operations, slot-level periodicity and an offset, or an OFDM symbol position in a slot (starting symbol and symbol length).

### <Proposal 4-Variation>

In each option of Proposal 4, a plurality of pieces of beam information of the base station may be indicated per time unit.

In each option of Proposal 4, the time unit may be configured for each of a plurality of frequency resources (per frequency resource domain unit). The base station may indicate the beam information of the base station in a time unit of each of the plurality of frequency resources. In this case, the repeater may simultaneously use a plurality of DL Tx beams in each of the plurality of frequency resources to transmit DL signals.

### <Proposal 5>

In Proposal 5, the operation of Type 2 described in Proposal 1 is assumed. A base station indicates the DL Tx beam of the repeater per time unit using transmission beam information of the repeater. Proposal 5 may include the following Options 1 to 7.

(Option 1): The base station indicates a plurality of pieces of continuous repeater beam information (e.g., beam ID of the repeater).

(Option 2): The base station indicates one piece of repeater beam information. The same beam information is continuously configured in the repeater.

(Option 3): The base station periodically configures a plurality of pieces of continuous repeater beam information.

(Option 4): The base station indicates one piece of repeater beam information. The same beam information is configured continuously and periodically in the repeater.

(Option 5): The repeater refers to a TCI state of DCI 11_x. The repeater decodes DCI for the terminal.

(Option 6): Use a TCI state of configuration/activation of SPS. Alternatively, a TCI state of configuration/activation of SPS is defined for the repeater.

(Option 7): The base station uses a TCI state of Rel-17 for indication of repeater beam information.

### <Proposal 5-Option 1>

The base station indicates a plurality of pieces of continuous repeater beam information to the repeater. The repeater controls a DL Tx beam based on a plurality of pieces of continuous repeater beam information.

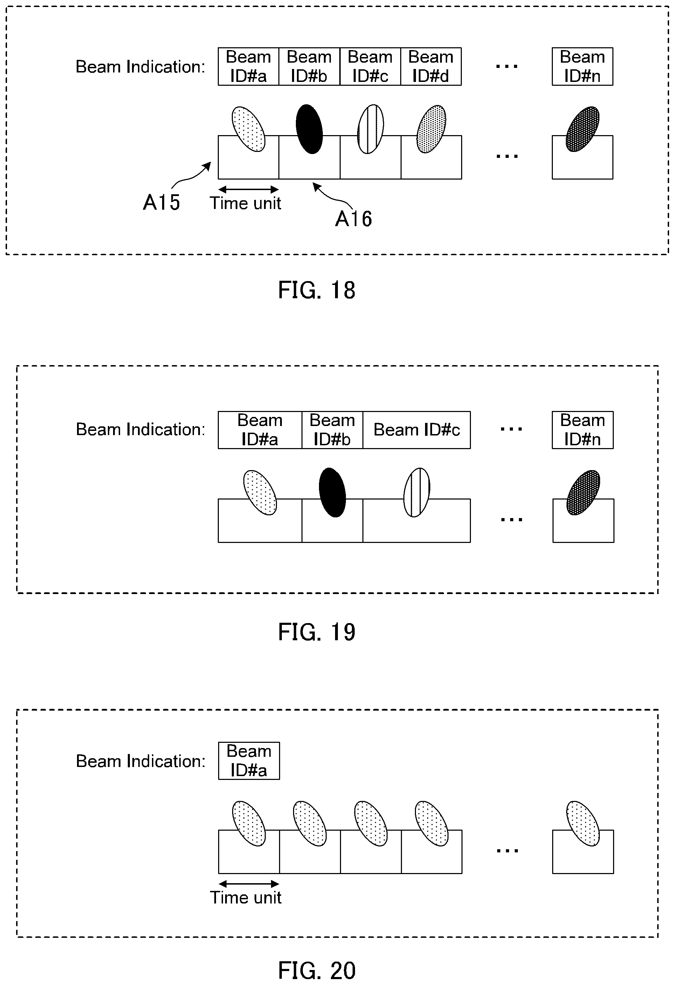

FIG. 18 illustrates an example of Proposal 5-Option 1. The "Beam Indication" in FIG. 18 refers to beam information indicated to the repeater by the base station. The beam information is a beam ID of the repeater, for example.

As illustrated in FIG. 18, a series of beam information of the repeater is applied in a series of time units. The base station indicates different beam information per time unit. For example, the base station indicates beam #a of the repeater in the time unit indicated by arrow A15 in FIG. 18. For example, the base station indicates beam #b in the time unit indicated by arrow A16 in FIG. 18.

FIG. 19 illustrates another example of Proposal 5-Option 1. In FIG. 19, the length of the time unit is different from that in FIG. 18. The length of the time unit illustrated in FIG. 18 is constant, but the length of the time unit illustrated in FIG. 19 is not constant. Note that, similarly to the description of FIG. 18, the base station indicates different beam information of the repeater per time unit in FIG. 19.

The sequence of time units to which beam control is applied may be indicated to the repeater as the number of consecutive time units. The sequence of time units to which beam control is applied may be indicated based on the start time and time length of the time units.

The start time or time length of the time units to which beam control is applied may be predefined. For example, the time units to which beam control is applied may start from a predefined offset from the reception of beam information, and range over a predefined length.

Also, the sequence of time units to which beam control is applied may be indicated to the repeater by using the sequence of time unit IDs. The beam information of the repeater and the time unit may be associated with each other. For example, the beam ID of the repeater and the time unit ID may be associated with each other.

### <Proposal 5-Option 2>

The base station indicates one piece of repeater beam information to the repeater. The indicated one piece of beam information is continuously configured in the repeater. In other words, the repeater continuously uses a DL Tx beam that is based on the indicated one piece of beam information.

FIG. 20 illustrates an example of Proposal 5-Option 2. The "Beam indication" in FIG. 20 refers to beam information indicated to the repeater by the base station. The beam information is, for example, a beam ID of the repeater.

As illustrated in FIG. 20, the base station indicates the beam information of the repeater to the repeater in certain one time unit. For example, the base station indicates beam #a to the repeater in certain one time unit.

The repeater continuously uses a DL Tx beam that is based on the indicated one piece of beam information. For example, the repeater uses a DL Tx beam that is based on the indicated one piece of beam information, over a plurality of time units. In the example in FIG. 20, the repeater uses a DL Tx beam that is based on beam ID "#a" of the repeater, over a plurality of time units.

The sequence of time units to which beam control is applied may be indicated to the repeater as the number of consecutive time units. The sequence of time units to which beam control is applied may be indicated based on the start time and time lengh of the time units.

The start time or time length of the time units to which beam control is applied may be predefined. For example, the time units to which beam control is applied may start from a predefined offset from the reception of beam information, and range over a predefined length.

Further, the sequence of time units may be indicated from the base station to the repeater as a sequence of time unit IDs.

### <Proposal 5-Option 3>

The base station periodically configures a plurality of pieces of continuous repeater beam information. The repeater periodically controls DL Tx beams based on a plurality of pieces of continuous repeater beam information indicated from the base station.

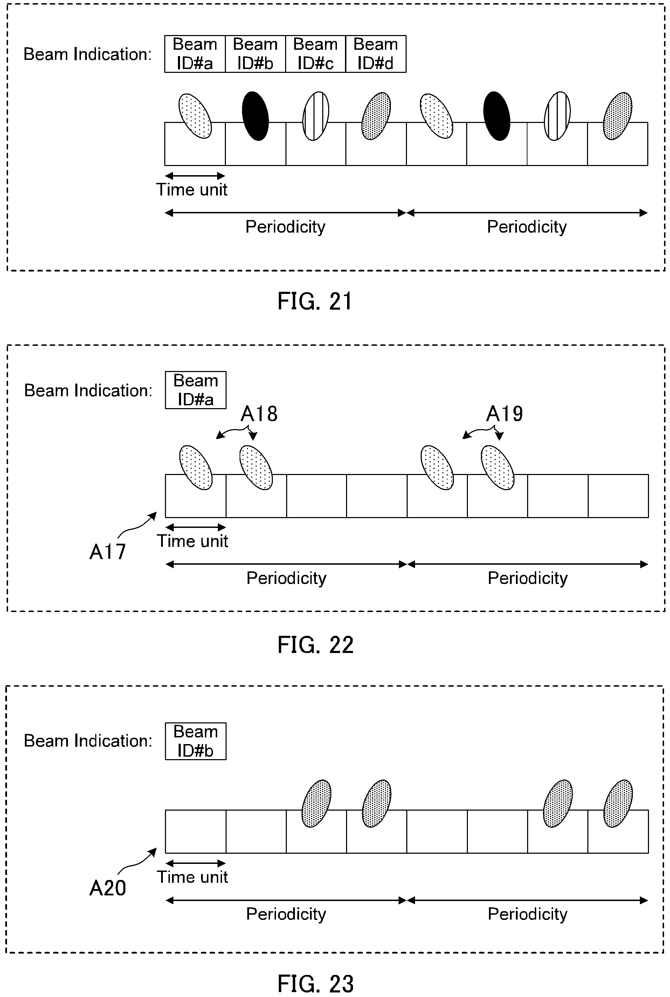

FIG. 21 illustrates an example of Proposal 5-Option 3. The "Beam indication" in FIG. 21 refers to beam information indicated to the repeater by the base station. The beam information is, for example, a beam ID of the repeater.

The base station indicates the beam information of the repeater in one periodicity to the repeater. For example, as illustrated in FIG. 21, the base station indicates beam IDs "#a, #b, #c, and #d" of the repeater to the repeater once, using all time units (four time units) in one periodicity.

Upon receiving beam IDs "#a, #b, #c, and #d" of the repeater in one periodicity, the repeater repeatedly (periodically) transmits DL Tx beams of the received beam IDs "#a, #b, #c, and #d."

The base station may indicate, to the repeater, the periodic pattern of the beam information of the repeater.

The base station may indicate, to the repeater, the periodicity of the beam information of the repeater and the offset. The offset may indicate, for example, a time unit in which transmission of the periodic DL Tx beam is started. The sequence of beam information of the repeater may be indicated by each beam information (e.g., "#a, #b, #c, and #d") applied to the time unit in one periodicity.

### <Proposal 5-Option 4>

The base station indicates one piece of repeater beam information. In the repeater, the same beam information is configured continuously and periodically.

FIG. 22 illustrates an example of Proposal 5-Option 4. The "Beam indication" in FIG. 22 refers to beam information indicated to the repeater by the base station. The beam information is, for example, a beam ID of the repeater.

The base station indicates the beam information of the repeater in one periodicity to the repeater once. For example, as indicated by arrow A17 in FIG. 22, the base station indicates the beam ID "#a" of the repeater to the repeater using some time units (one time unit) in one periodicity.

The repeater continuously uses a DL Tx beam that is based on the indicated one piece of beam information. For example, the repeater uses a DL Tx beam that is based on the indicated one piece of beam information, over some time units in one periodicity.

For example, as indicated by arrow A18 in FIG. 22, the repeater uses a DL Tx beam that is based on the indicated one piece of beam information, over two time units among the four time units in one periodicity. For example, as indicated by arrow A19 in FIG. 22, the repeater uses a DL Tx beam that is based on the indicated one piece of beam information, over two time units among the four time units in one periodicity.

The sequence of time units to which beam control is applied may be indicated to the repeater as the number of consecutive time units. The sequence of time units to which beam control is applied may be indicated based on the start time and time length of the time units.

The start time or time length of the time units to which beam control is applied may be predefined. For example, the time units to which beam control is applied may start from a predefined offset from the reception of beam information, and range over a predefined length.

The base station may indicate, to the repeater, the periodic pattern of the beam information of the repeater.

The base station may indicates, to the repeater, the periodicity of the beam information of the repeater and the offset. The offset may indicate, for example, a time unit in which transmission of a DL Tx beam in one periodicity is started. Further, the number of time units (two in the case of FIG. 22) to which beam control is applied in one periodicity may be indicated to the repeater.

FIG. 23 illustrates another example of Proposal 5-Option 4. The "Beam indication" in FIG. 23 refers to beam information indicated to the repeater by the base station. The beam information is, for example, a beam ID of the repeater.

The base station indicates the beam information of the repeater in one periodicity to the repeater. For example, as indicated by arrow A20 in FIG. 23, the base station indicates the beam ID "#b" of the repeater to the repeater, using some time units (one time unit) in one periodicity.

The repeater continuously uses a DL Tx beam that is based on the indicated one piece of beam information. For example, the repeater uses a DL Tx beam that is based on the indicated one piece of beam information, over the third and fourth time units among the four time units in one periodicity based on the offset indicated from the base station.

The base station may control DL Tx beams of the repeater so that a plurality of DL Tx beams in the repeater do not overlap with each other.

For example, as illustrated in FIG. 22, the base station controls the DL Tx beam of the repeater so that the DL Tx beam of beam #a is transmitted in the first and second time units in one periodicity. Further, as illustrated in FIG. 23, the base station controls the DL Tx beam of the repeater so that the DL Tx beam of beam #b is transmitted in the third and fourth time units in one periodicity.

The above-described operation allows the repeater to continuously transmit a plurality of DL Tx beams in one periodicity using a plurality of time units.

### <Proposal 5-Option 5>

The repeater refers to a TCI state of DCI 1_x. The repeater decodes DCI for the terminal.

For example, the base station indicates beam information to the repeater using a TCI state field or a new field of DCI (DCI 1_x) that schedules a PDSCH. The TCI state field or the new field of DCI indicates beam information such as a DL Tx beam ID of the repeater. The beam information (DL Tx beam ID of the repeater) and the DL Tx beam of the repeater are applied to a slot/symbol indicated in a TDRA field of the DCI.

The repeater need not decode a PDSCH sometimes. In this case, the repeater may simply amplify and forward the DL signal.

For example, the repeater receives DCI 1_x. In this case, when the base station indicates, to the terminal, forwarding of only a DL signal to the terminal, the repeater need not decode a PDSCH. The repeater (MT function of the repeater) need not decode or process a PDSCH of the resource indicated by DCI by the following method.

(Method 1): When a predefined value is set in one or a plurality of existing fields (or new field) of DCI, the repeater forwards only a DL signal from the base station to the terminal in a slot or symbol indicated in DCI. The repeater does not decode or process a PDSCH of the resource indicated in DCI.

(Method 2): When detecting DCI in a particular RNTI, SS-set, or CORESET, the repeater forwards only a DL signal from the base station to the terminal in a slot or symbol indicated in the DCI. The repeater does not decode or process a PDSCH of the resource indicated in the DCI.

As an alternative to above-described Methods 1 and 2, a new DCI format may be introduced.

For example, the new DCI format includes a field similar to a TCI state field of DCI 1_x. This field indicates beam information of the repeater.

Further, the new DCI format includes a field similar to a TDRA field of DCI 1_x. This field indicates an applicable time (e.g., slot offset and symbol position in the slot) for the beam information of the repeater indicated to the repeater.

### <Proposal 5-Option 6>

Use a TCI state of configuration/activation of SPS. Alternatively, a TCI state of configuration/activation of SPS is defined for the repeater.

A PDSCH of SPS is configured by an RRC parameter such as SPS-Config. Transmission of a PDSCH of SPS is activated and deactivated/released by DCI (activation DCI).

For example, the base station indicates beam information to the repeater using activation DCI of SPS. A TCI state field or a new field in activation DCI of SPS indicates beam information such as a DL Tx beam ID of the repeater. The beam information (DL Tx beam ID of the repeater) indicated to the repeater and the DL Tx beam of the repeater are applied to a slot or symbol indicated in the configuration of SPS (RRC parameter) or a TDRA field of activation DCI of SPS.

For example, the configuration of SPS may indicate the periodicity of beam information. The TDRA field of activation DCI of SPS may indicate a slot offset of the DL Tx beam in the repeater or a symbol position in the slot.

The repeater need not decode a PDSCH sometimes. In this case, the repeater may simply amplify and forward the DL signal.

For example, the repeater may receive a SPS configuration (RRC parameter) or activation DCI. In this case, when the base station indicates, to the terminal, forwarding of only a DL signal to the terminal, the repeater need not decode a PDSCH.

For example, when a predefined value is configured in one or a plurality of existing fields (or new field) of a SPS configuration or activation DCI, the repeater forward only a DL signal from the base station to the terminal in the slot or symbol indicated in activation DCI (TDRA). The repeater does not decode or process a PDSCH of the resource indicated in activation DCI.

Further, a new RRC configuration or DCI similar to an SPS configuration or activation DCI may be introduced.

For example, the new RRC configuration or DCI includes a field similar to a TCI state field of activation DCI. This field indicates beam information of the repeater.

Further, the new RRC configuration or DCI includes a field similar to the field in which SPS periodicity of the SPS configuration is configured. This field indicates an applicable time (e.g., slot offset and symbol position in the slot) for the beam information of the repeater indicated to the repeater.

The new RRC configuration or DCI includes a field similar to a TDRA field of activation DCI. This field indicates a slot or symbol for controlling a DL Tx beam of the repeater.

### <Proposal 5-Option 7>

The base station uses a TCI state of Rel-17 for indication of repeater beam information.

In Rel-17, as illustrated in FIG. 17, unified TCI state indication DCI is defined. A TCI state field or a new field of the unified TCI state indication DCI of Rel-17 indicates beam information such as a DL Tx beam ID of the repeater. The base station indicates the beam information of the repeater to the repeater using the unified TCI state indication DCI of Rel-17.

The beam information (Tx beam ID of the repeater) indicated to the repeater and the DL Tx beam of the repeater may be started at least from the first symbol/slot in the X slot/X symbol after the last slot/symbol of the PUCCH transmitting HARQ-ACK for the DCI.

Alternatively, the beam information indicated to the repeater and the DL Tx beam of the repeater may be started at least from the first symbol/slot in the X slot/X symbol after the slot/symbol in which the DCI is received.

Note that the X may be a target for a predefinition, configuration, or repeater function.

Further, a new DCI format may be introduced to indicate the beam information of the repeater to the repeater.

For example, the new DCI format includes a field similar to a TCI state field of unified TCI state indication DCI of Rel-17. This field indicates beam information of the repeater. This field also indicates an applicable time for the beam information (e.g., slot offset and symbol position in the slot).

### <Proposal 5-Variation>

In each option of Proposal 5, a plurality of pieces of beam information of the repeater may be indicated per time unit.

In each option of Proposal 5, the time unit may be configured for each of a plurality of frequency resources (per frequency resource domain unit). The base station may indicate the beam information of the repeater in the time unit of each of the plurality of frequency resources. In this case, the repeater may simultaneously use a plurality of DL Tx beams in each of the plurality of frequency resources to transmit DL signals.

The beam information of the repeater in Proposal 5 may be indicated from the base station to the repeater based on the following Alt.1 to Alt.3.

(Alt. 1): Beam information of the repeater may be, for example, a repeater DL Tx beam ID or a repeater DL Tx spatial domain filter ID. Different IDs may refer to different spatial domain filters.

(Alt.2): Beam information of the repeater in Proposal 5 may be indicated from the base station to the repeater through a repeater DL RS resource ID.

The repeater DL RS resource is a newly defined RS resource used to manage beam information of the repeater (see Proposal 2-Option 4) and may be used for an RS of the spatial domain filter of the repeater.

Each repeater DL RS resource occupies a particular time-domain resource indicated by the base station.

The repeater amplifies the DL RS of the base station in each repeater DL RS resource and forwards the DL RS to the terminal.

When the repeater DL RS resource ID is indicated as a beam ID of the time unit, it may mean that the same repeater DL Tx spatial domain filter as the repeater DL RS resource is used for the time unit.

(Alt.3): Beam information of the repeater may be indicated as a repeater TCI state ID from the base station to the repeater.

A repeater TCI state ID is newly defined so that a repeater DL RS resource ID is indirectly referred to. For example, each repeater TCI state is associated with a repeater DL RS resource. When a repeater TCI state ID is indicated as a beam ID of the time unit, it may mean that the same repeater DL Tx spatial domain filter as the repeater DL RS resource associated with the repeater TCI state is used in the time unit.

The repeater DL RS resource is a newly defined RS resource used to manage a repeater DL Tx beam (see Proposal 2-Option 4) and may be used for the RS of the spatial domain filter of the repeater.

Each repeater DL RS resource occupies a particular time-domain resource indicated by the base station.

The repeater amplifies the DL RS of the base station in each repeater DL RS resource and forwards the DL RS to the terminal.

### <Proposal 6>

In Proposal 6, the operation of Type 2 described in Proposal 1 is assumed. A base station indicates a DL Tx beam per RS resource defined for a DL Tx beam of the repeater.

As described in Proposal 2-Option 4, a repeater DL RS resource is a newly defined RS resource used to manage a DL Tx beam of the repeater. Each repeater DL RS resource occupies a particular time-domain resource indicated by the base station. The repeater amplifies the DL RS of the base station in each repeater DL RS resource and forwards the DL RS to the terminal.

The configuration of the repeater DL RS resource will be described below.
(1): A plurality of repeater DL RS resources may be configured in the repeater.
(2): Each repeater DL RS resource may occupy a plurality of adjacent symbols. The number of adjacent symbols (the number of candidates to be supported) may be predefined. For example, the number of adjacent symbols may be 1, 2, or 4.
(3): A repeater DL RS resource set (hereinafter, sometimes referred to as a resource set) may be configured. Each resource set is configured by a plurality of repeater DL RS resources. The number of resources (the number of candidates to be supported) in each resource set may be predefined or may be a repeater capability.
(4): The following parameters (information) may be configured by SCI (RRC/MAC CE/DCI) for a repeater DL RS resource or a resource set.
   - Repeater DL RS resource ID/resource set ID
   - Parameter relating to a time-domain behavior, for example, a parameter indicating that a repeater DL RS resource or a resource Type of a resource set is periodic, semi-permanent, or aperiodic
   - Slot-level periodicity of a repeater DL RS resource/resource set (in the case of a P/SP resource/resource set)
   - Slot-level offset of a repeater DL RS resource/resource set
   - Symbol position of a resource in a slot (including a starting symbol and the number of symbols)
(5): In the case of a semi-persistent repeater DL RS resource/resource set, the forwarding operation of the repeater may be activated or deactivated by SCI. For example, when the repeater DL RS resource is activated, the repeater forwards a DL signal using the repeater DL RS resource. When the repeater DL RS resource is deactivated, the repeater does not forward a DL signal using the repeater DL RS resource. An indicator indicating the activation and deactivation of the repeater DL RS resource ID/resource set ID may be included in SCI.
(6): In the case of an aperiodic repeater DL RS resource/resource set, the repeater DL RS resource/resource set may be triggered by SCI. When the repeater DL RS resource/resource set is triggered by SCI, the repeater may forward a DL signal to the terminal.

A repeater DL RS resource ID/resource set ID may be included in SCI for the trigger of the repeater DL RS resource/resource set. Alternatively, a parameter indicating a trigger state of the repeater DL RS resource ID/resource set ID may be included in SCI. The trigger state may be set per repeater DL RS resource/resource set.

A slot offset or a symbol position of the resource in a slot (including the starting symbol and the number of symbols) may be indicated by SCI.

ADL Tx beam of the repeater used in a repeater DL RS resource may perform an operation based on the following Alt. 1 to Alt. 3 and Variation.

(Alt.1): A DL Tx beam of the repeater may depend on the implementation of the repeater. For example, by default, different repeater DL Tx beams may be used for different repeater DL RS resources in the same resource set.

(Alt.2): A DL Tx beam of the repeater may be indicated from the base station through RRC or MAC CE in each repeater DL RS resource.

For example, a repeater DL Tx beam ID directly referring to a spatial domain filter of the repeater used for DL transmission (DL forwarding) is indicated from the base station. Alternatively, an ID of another repeater DL RS resource (referred to as a reference repeater DL RS resource) is indicated from the base station for the determination of a spatial domain filter of the repeater DL RS resource (referred to as a target repeater DL RS resource). This means that the same repeater DL Tx spatial domain filter as the indicated reference repeater DL RS resource is used for the target repeater DL RS resource. Alternatively, an ID of the repeater TCI state associated with the reference repeater DL RS resource is indicated from the base station.

(Alt.3): When there is an indication from the base station, a DL Tx beam of the repeater may operate in accordance with the indication of the base station, and when there is no indication from the base station, the DL Tx beam may operate depending on the implementation. The above-described indication may be performed by SCI.

(Variation): For example, similarly to a CSI-RS, the parameter "Repetition"={ON, OFF} may be specified for the resource set.

For example, Repetition=ON means that the repeater uses the same DL Tx beam in all repeater DL RS resources in the resource set. Repetition=OFF means that the repeater uses different DL Tx beams in different repeater DL RS resources in the resource set.

### <Proposal 7>

A base station indicates a transmission beam of the repeater using beam information of the base station. In Proposal 7, the following operation may be assumed for the operation of Type 1 described in Proposal 1 and Option 5 of Proposal 2.
(1): A content (operation) of Proposal 4 is used to indicate, to the repeater, information of each DL RS resource of the base station and a Tx beam (beam information) of the base station in each DL RS resource.
(2): A Tx DL beam ID of the repeater is indicated by the base station in each DL RS resource of the base station. Alternatively, a Tx DL beam ID of the repeater depends on the implementation of the repeater in each DL RS resource of the base station. The Tx DL Beam ID of the repeater is reported to the base station.
(3): A Tx DL beam ID of the repeater is indicated by the base station for each Tx-beam (each TCI state) of the base station. Alternatively, a Tx DL beam ID of the repeater depends on the implementation of the repeater for each Tx beam (each TCI state) of the base station. The Tx DL Beam ID of the repeater is reported to the base station.

Note that "repeater DL Tx beam ID" may be newly defined as a term meaning a spatial domain filter of the repeater used for transmitting (forwarding) a DL signal.

### <Proposal 8>

A repeater uses a mechanism of an RS measurement method and a reporting method in the terminal.

The repeater uses a CSI framework. The repeater measures a DL RS from the base station and reports to the base station.

A function of the repeater may be regarded as a function of repeater MT. The repeater MT includes the same function as the terminal or IAB-MT. For example, the repeater MT connects to the base station in the same manner as the terminal, and receives a control signal from the base station. The IAB is an abbreviation for Integrated Access and Backhaul.

Note that a Radio Resource Management (RRM) framework may be used to measure a Tx beam for the quality determination of a Tx beam of the base station towards the repeater. The repeater measures the quality of the Tx beam of the base station in the RRM framework and reports to the base station.

The following changes or restrictions may be considered for a CSI report configuration or a CSI resource configuration in the repeater. In other words, the measurement function in the terminal may be changed or restricted and applied to the repeater.
(1): Only an SSB or CSI-RS may be configured as an RS for beam-measuring by the repeater. In other words, the repeater can configure either an SSB or CSI-RS as an RS for beam-measuring.
(2): Only one or some of periodic, semi-persistent, and aperiodic resource types may be used for a CSI resource configuration of the repeater.
(3): Only one or some of periodic, semi-persistent, and aperiodic resource types may be used for a CSI report configuration of the repeater.
(4): Only some quantities of "cri-RI-PMI-CQI," "cri-RI-i1," "cri-RI-i1-CQI," "cri-RI-CQI," "cri-RSRP," "cri-SINR," "ssb-Index-RSRP," "ssb-Index-SINR," and/or "cri-RI-LI-PMI-CQI" may be configured for the repeater. In other words, the repeater may report the above-described some quantities (Report Quantity) to the base station for CSI reporting.
(5): Only the non-group-based beam report may be configured to the repeater. For example, in the repeater, only "disabled" is configured and "enabled" is not configured to the RRC parameter "groupBasedBeamReport" (see e.g., 3GPP TS 38.331 V16.7.0 (2021-12) Section 6.3.2 and 3GPP TS 38.214 V16.8.0 (2021-12) Section 5.2.1.4.2).
(6): Only repetition = "OFF" may be configured to the repeater. In other words, the repeater does not perform repetitive transmission.
(7): Candidate values of different numbers of RSs reported from a legacy terminal may be configured for the repeater. For example, a subset of the candidate value of the measurement report of the legacy terminal may be configured to the repeater, and the value may be less or greater than that of the legacy terminal.
(8): A candidate value with CSI resource periodicity different from that of the legacy terminal may be configured for the repeater. For example, a candidate value with CSI resource periodicity different from that of the legacy terminal may be configured to the repeater and the value may be less or greater than that of the legacy terminal (e.g., 640/1280/2560/... slot). Note that it is preferred that the value with CSI resource periodicity configured to the repeater be greater than that of the legacy terminal.
(9): The maximum value of the parameter on the measurement of the repeater specified in the higher layer, such as RRC, may be different from the maximum value of the parameter on the measurement of the legacy terminal (see e.g., 3GPP TS 38.331 V16.7.0 (2021-12), Section 6.4).

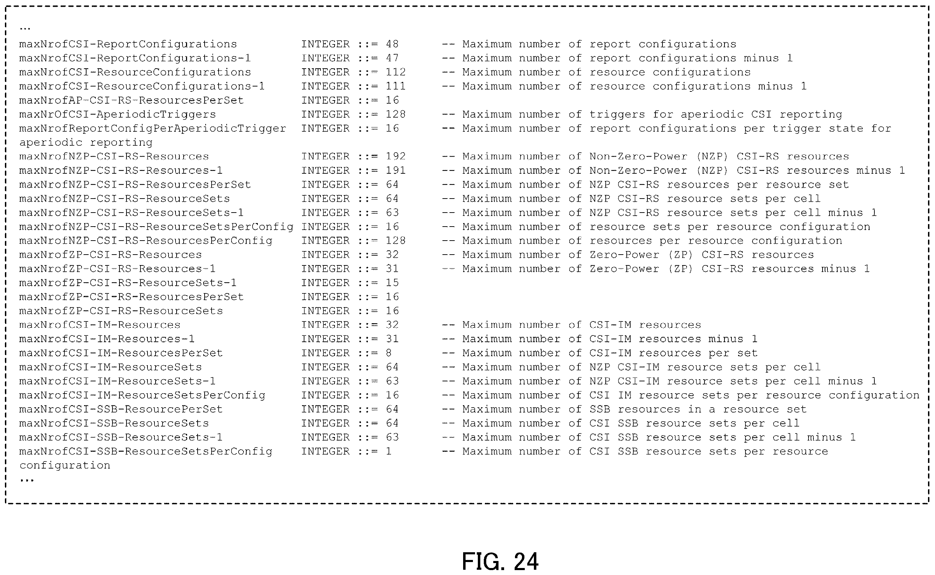

FIG. 24 illustrates exemplary RRC parameters. For the repeater, for example, the maximum values of parameters on the measurements such as a CSI report configuration, a CSI resource configuration, a CSI-RS resource set, a CSI-RS resource, a CSI-RS resource set per resource configuration, a CSI-RS resource per CSI-RS resource configuration, and a CSI-RS resource per resource set may be different from the maximum values for the legacy terminal. For example, the maximum value for the repeater may be less or greater than the maximum value for the legacy terminal.

Further, for the repeater, some (types) of RRC parameters related to measurements may be omitted (limited) compared to (may be less than) the RRC parameters of the legacy terminal.

A Legacy framework of terminal functions associated with a beam measurement and a report may be used by the repeater.

The function required for the legacy terminal may not be required for the repeater. The function essential for the legacy terminal may be optional for the repeater. A candidate value/value range/parameter or default/essential value/value range/parameter of the repeater may be different from those of the legacy terminal.

The repeater is unlikely to be moved once installed, for example. Therefore, as described in Proposal 8, the measurement function in the terminal may be changed or limited and applied to the repeater. This reduces the power consumption of the repeater. The cost of the repeater is reduced.

### Proposal 1 to Proposal 8 have been described above.

### <Variation 1>

Beam indication may be applied in a time unit of DL. For example, the beam indication in Proposal 3 and Proposal 5 may be applied in a time unit indicated as DL. Also, for example, the beam indication in Proposal 3 and Proposal 5 may be applied in at least one symbol of a time unit indicated as DL.

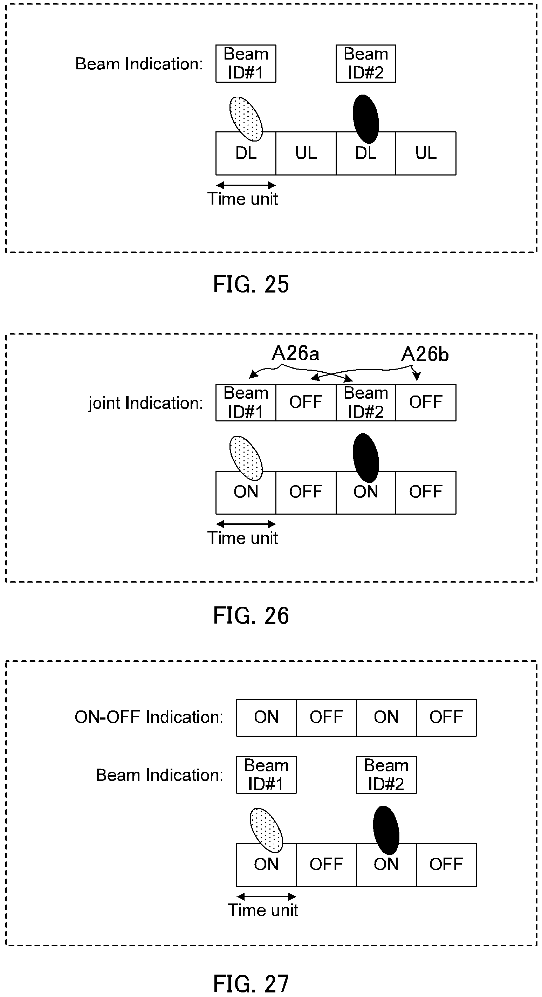

FIG. 25 illustrates an example of Variation 1. FIG. 25 illustrates time units of DL and time units of UL.

For example, the base station may indicate the beam information of the base station in the DL time unit. For example, the base station may indicate the beam information of the repeater in the DL time unit.

Further, when a series of beam information is indicated in a series of time units, the series of beam information may be applied in the DL time unit. In other words, the series of beam information is not applied to the UL time unit.

### <Variation 2>

The base station may perform joint indication of the beam and on/off of the repeater on the repeater. For example, in the operations described in Proposal 3 and Proposal 5, the base station may indicate beam information to the repeater in some time units, and may indicate turning off of DL of the repeater in some time units. Turning off of DL of the repeater may mean that the repeater does not transmit (forward) a DL signal.

FIG. 26 illustrates an example of Variation 2. As indicated by arrow A26a in FIG. 26, the base station indicates beam information to the repeater in certain time units. As indicated by arrow A26b in FIG. 26, the base station indicates turning off of DL of the repeater in certain time units.

FIG. 27 illustrates another example of Variation 2. FIG. 27 illustrates ON-OFF Indication (operation indication in DL) of the repeater. For example, when the ON-OFF Indication of the repeater indicates ON, the base station notifies the repeater of beam information. The repeater transmits a DL Tx beam in a time unit in which the beam information has been indicated. On the other hand, when the ON-OF Indication of the repeater indicates OFF, the base station does not notify beam information of the repeater. The repeater turns off the DL in a time unit in which the beam information has not been indicated.

### <Variation 3>

The base station may perform power control of the repeater. In other words, the repeater may be power-controlled by the base station.

A power control parameter in DL Tx of the repeater may be configured per DL Tx beam of the repeater. Alternatively, the power control parameter in DL Tx of the repeater may be configured per time unit. Alternatively, the power control parameter in DL Tx of the repeater may be configured together with beam information per time unit.

A power scaling level may be predefined or configured. The power scaling level may be, for example, indicated as two-bit information as follows.

00: Maximum power
01: Maximum Power × Gap × 1 or Maximum Power × Scaling × 1
10: Maximum Power × Gap × 2 or Maximum Power × Scaling × 2
11: Zero Power (OFF)

The power scaling level may be indicated per time unit. The power scaling level may be indicated from the base station to the repeater using signaling such as DCI, MAC CE, or RRC. The gap or scaling may be indicated from the base station to the repeater using signaling such as DCI, MAC CE, or RRC.

### <Function of Base Station and Repeater>

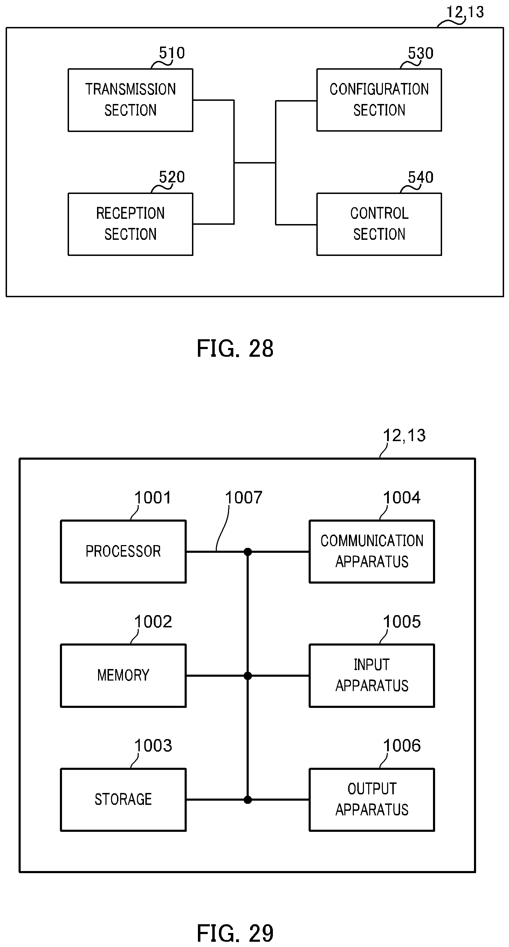

FIG. 28 illustrates an exemplary functional configuration of base station 12 and repeater 13 according to the embodiment. As illustrated in FIG. 28, base station 12 and repeater 13 include transmission section 510, reception section 520, configuration section 530, and control section 540. The functional configuration illustrated in FIG. 28 is merely an example. As long as the operation according to the embodiment of the present disclosure can be executed, the names of the function classification and the functional section may be any names.

Transmission section 510 generates a transmission signal from transmission data and transmits the generated transmission signal by radio. Reception section 520 receives various types of signals by radio and obtains a higher layer signal from the received physical layer signals.

For example, configuration section 530 stores various types of configuration information received from the communication partner by reception section 520 in a storage device (storage section), and reads the configuration information from the storage device as necessary. Configuration section 530 also stores pre-set configuration information in the storage device. Note that configuration section 530 may be included in control section 540.

Control section 540 controls the entire operation of base station 12 and repeater 13. A functional section related to signal transmission in control section 540 may be included in transmission section 510, and a functional section related to signal reception in control section 540 may be included in reception section 520.
(1): Reception section 520 of repeater 13 receives a plurality of beams from base station 12.

Control section 540 of repeater 13 determines a beam for terminal 14 based on beam information of base station 12. The beam information is included in the beam received by reception section 520 and associated with each of the plurality of beams.

The above-described operation allows repeater 13 to appropriately control a beam directed to terminal 14.

Control section 540 of repeater 13 holds mapping rule R21 in which a plurality of pieces of beam information of base station 12 and a plurality of pieces of beam information for terminal 14 are associated with each other. Control section 540 of repeater 13 refers to mapping rule R21, obtains the beam information for terminal 14 corresponding to the beam information of base station 12 included in the received beam, and determines a beam for terminal 14.

The above-described operation allows repeater 13 to appropriately control a beam directed to terminal 14.

Further, transmission section 510 of base station 12 transmits a plurality of beams to repeater 13.

Control section 540 of base station 12 includes beam information of base station 12 associated with each of a plurality of beams to be transmitted to repeater 13 in a beam to be transmitted to repeater 13, and controls the beam of repeater 13 directed to terminal 14.

The above-described operation allows repeater 13 to appropriately control a beam directed to terminal 14 by base station 12.

(2): Reception section 520 of repeater 13 receives a beam from base station 12.

Control section 540 of repeater 13 determines a beam for terminal 14 based on beam information of repeater 13. The beam information is included in the beam received by reception section 520 and associated with each of a plurality of beams of repeater 13.

The above-described operation allows repeater 13 to appropriately control a beam directed to terminal 14.

Reception section 520 of the repeater receives the beam with the best communication quality from base station 12. The above-described operation allows repeater 13 to appropriately control a beam directed to terminal 14.

Further, control section 540 of base station 12 includes the beam information of the repeater associated with each beam of repeater 13 in the beam of base station 12.

Transmission section 510 of base station 12 transmits the beam including the beam information of repeater 13 to repeater 13.

The above-described operation allows repeater 13 to appropriately control a beam directed to terminal 14 by base station 12.

Transmission section 510 of base station 12 transmits a beam with the best communication quality to repeater 13.

The above-described operation allows repeater 13 to appropriately control a beam directed to terminal 14 by base station 12.

(3): Reception section 520 of repeater 13 receives a plurality of beams from base station 12.

Control section 540 of repeater 13 determines a beam for terminal 14 based on beam information of base station 12. The beam information is included in each time unit of the beam received by reception section 520, and is associated with each of the plurality of beams.

The above-described operation allows repeater 13 to appropriately control a beam directed to terminal 14.

One piece of beam information is included over a plurality of time units. Thus, repeater 13 can appropriately control a beam directed to terminal 14.

Further, reception section 520 of repeater 13 receives a plurality of beams from base station 12.

Control section 540 of repeater 13 determines a beam for terminal 14 based on beam information of base station 12. The beam information is included in each resource for a reference signal included in the beam received by reception section 520 and associated with each of the plurality of beams.

The above-described operation allows repeater 13 to appropriately control a beam directed to terminal 14.

Control section 540 of repeater 13 decodes the reference signal for terminal 14 and obtains the beam information of base station 12.

The above-described operation allows repeater 13 to appropriately control a beam directed to terminal 14.

(4): Reception section 520 of repeater 13 receives a beam from base station 12.

Control section 540 of repeater 13 determines a beam for terminal 14 based on beam information of repeater 13. The beam information is included in each time unit of the beam received by reception section 520, and is associated with each beam of repeater 13.

The above-described operation allows repeater 13 to appropriately control a beam directed to terminal 14.

One piece of beam information is included over a plurality of time units. Therefore, repeater 13 can appropriately control a beam directed to terminal 14.

Further, reception section 520 of repeater 13 receives a beam from base station 12.

Control section 540 of repeater 13 determines a beam for terminal 14 based on beam information of repeater 13. The beam information is included in each resource for a reference signal included in the beam received by reception section 520, and is associated with each beam of repeater 13.

The above-described operation allows repeater 13 to appropriately control a beam directed to terminal 14.

Control section 540 of repeater 13 decodes the reference signal and obtains the beam information of repeater 13.

The above-described operation allows repeater 13 to appropriately control a beam directed to terminal 14.

(5): Control section 540 of repeater 13 measures communication quality with base station 12 using fewer types of a signal than a signal used by terminal 14 for measuring communication quality.

Transmission section 510 of repeater 13 transmits the measurement result of the communication quality with base station 12 to base station 12.

The above-described operation allows repeater 13 to appropriately control a beam directed to terminal 14.

The resource type of the signal is limited to one or some of the periodic, semi-persistent, and aperiodic resource types.

The resource type of the measurement result is limited to one or some of the periodic, semi-persistent, and aperiodic resource types.

The types of measurement results are fewer than those in the terminal.

The maximum values of the above-described measurements specified by the higher layer are different from the maximum values of the measurements in the terminal.

Unlike terminal 14, repeater 13 is unlikely to move, and therefore repeater 13 can appropriately control a beam directed to terminal 14 even when the operation and the like is limited. Further, the repeater can reduce the power consumption by limiting the operation and the like.

The present disclosure has been described above. It should be noted that the categorization of items in the above description is not essential for the present disclosure, and the matters described in two or more items may be used in combination as necessary, or a matter described in a certain item may be applied to a matter described in another item (unless these matters are incompatible with each other).

### <Hardware Configuration>

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit", "transmission section", or "transmitter". The methods for implementing the functions are not limited specifically as described above.

For example, base station 12, repeater 13, and the like according to an embodiment of the present disclosure may function as a computer that executes processing of a radio communication method of the present disclosure. FIG. 29 illustrates an exemplary hardware configuration of base station 12 and repeater 13 according to one embodiment of the present disclosure. Physically, base station 12 and repeater 13 as described above may be a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of base station 12 and of repeater 13 may include one apparatus or a plurality of apparatuses illustrated in the drawings or may not include part of the apparatuses.

The functions of base station 12 and repeater 13 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 540 described above may be implemented using processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 540 of base station 12 and repeater 13 may be implemented using a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and radio networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 510, reception section 520, and the like described above may be implemented using communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) that makes output to the outside. Note that input apparatus 1005 and output apparatus 1006 may be integrated (for example, a touch panel).

The apparatuses, such as processor 1001, memory 1002, are connected by bus 1007 for communication of information. Bus 1007 may be configured using a single bus or using buses different between each pair of the apparatuses.

Furthermore, base station 12 and repeater 13 may include hardware, such as a microprocessor, a Digital Signal Processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification of Information and Signaling>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC Connection Reconfiguration message, or the like.

### <Applied System>

The embodiments described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is an integer or a decimal number, for example)), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects >

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a radio technique (e.g., an infrared ray and a microwave), the at least one of the wired technique and the radio technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station ," "fixed station," "NodeB," "eNodeB (eNB)," "gNodeB (gNB)," "access point," "transmission point," "reception point, "transmission/reception point," "cell," "sector," "cell group," "carrier," "component carrier," and the like may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Terminal>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity refers to a movable object, and has any moving speed. Naturally, the mobile entity in a state of being stopped is also encompassed. Examples of the mobile entity include, but are not limited to, vehicles, transport vehicles, automobiles, motorcycles, bicycles, connected cars, excavators, bulldozers, wheel loaders, dump trucks, forklifts, trains, buses, rear cars, manpower vehicles, ships and other watercrafts, airplanes, rockets, satellites, drones (registered trademark), multicopters, quadcopters, balloons, and goods loaded thereon. Further, the mobile entity may be a mobile entity that autonomously travels based on an operation command. The mobile entity may be a means of transport (e.g., a car, an airplane, or the like), an unmanned mobile entity (e.g., a drone, an autonomous driving vehicle, or the like), or a robot (manned or unmanned). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the terminal. For example, the aspects and the embodiments of the present disclosure may find application in a configuration that results from replacing communication between the base station and the terminal with communication between multiple terminals (such communication may, e.g., be referred to as device-to-device (D2D), vehicle-to-everything (V2X), or the like). In this case, base station 12 may be configured to have the functions that repeater 13 described above has. The wordings "uplink" and "downlink" may be replaced with a corresponding wording for inter-equipment communication (for example, "side"). For example, an uplink channel, a downlink channel, and the like may be replaced with a side channel.

Similarly, the terminal in the present disclosure may be replaced with the base station. In this case, base station 12 is configured to have the functions that repeater 13 described above has.

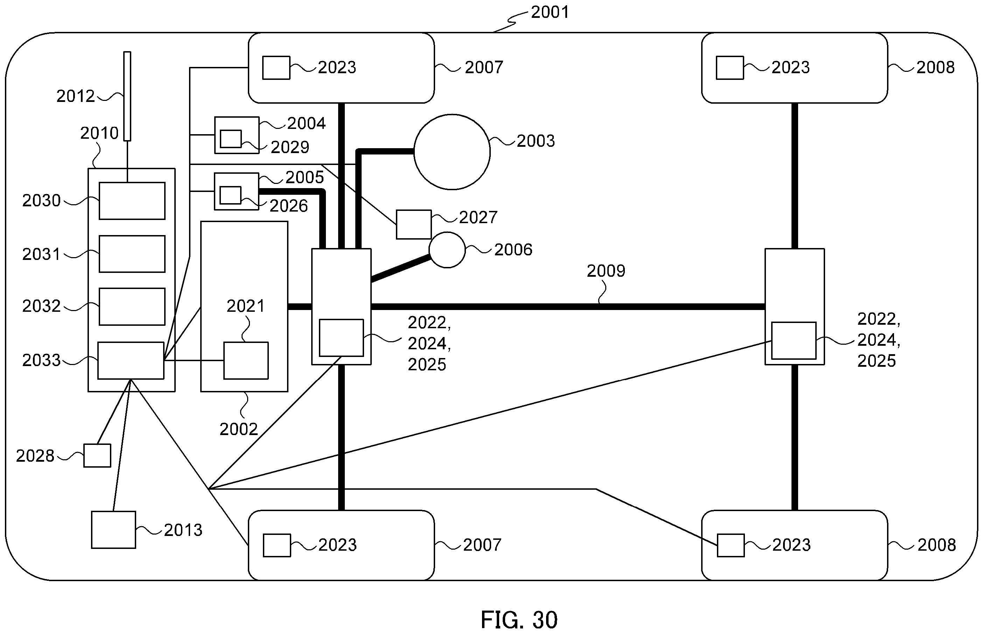

FIG. 30 illustrates a configuration example of vehicle 2001. As illustrated in FIG. 30, vehicle 2001 includes drive section 2002, steering section 2003, accelerator pedal 2004, brake pedal 2005, shift lever 2006, front wheels 2007, rear wheels 2008, axle 2009, electronic control section 2010, various sensors 2021 to 2029, information service section 2012, and communication module 2013. Each of the aspects/embodiments described in the present disclosure may be applied to a communication apparatus mounted on vehicle 2001 and may, for example, be applied to communication module 2013. For example, vehicle 2001 with the function of repeater 13 may function as a repeater vehicle movable to the place where communication relay is required.

Drive section 2002 is composed of, for example, an engine, a motor, or a hybrid of an engine and a motor. Steering section 2003 includes at least a steering wheel (also referred to as a handle) and is configured to steer at least one of the front and rear wheels based on an operation of the steering wheel operated by a user.

Electronic control section 2010 includes microprocessor 2031, memory (ROM and/or RAM) 2032, and communication port (IO port) 2033. Signals from various sensors 2021 to 2029 provided in vehicle 2001 are inputted to electronic control section 2010. Electronic control section 2010 may be referred to as an Electronic Control Unit (ECU).

The signals from various sensors 2021 to 2029 include a current signal from current sensor 2021 for sensing the current of the motor, a rotational speed signal of the front and/or rear wheels obtained by rotational speed sensors 2022, a pneumatic signal of the front and/or rear wheels obtained by pneumatic sensors 2023, a vehicle speed signal obtained by vehicle speed sensors 2024, an acceleration signal obtained by acceleration sensors 2025, an accelerator pedal depression amount signal obtained by accelerator pedal sensor 2029, a brake pedal depression amount signal obtained by brake pedal sensor 2026, an shift lever operation signal obtained by shift lever sensor 2027, a detection signal for detecting an obstacle, a vehicle, a pedestrian, or the like obtained by object detection sensor 2028, and the like.

Information service section 2012 is composed of various devices such as a car navigation system, audio system, speaker, television, and radio for providing various types of information such as driving information, traffic information, entertainment information, and the like, and of one or more ECUs for controlling these devices. Information service section 2012 provides various types of multimedia information and multimedia services to an occupant of vehicle 2001 using information obtained from an external apparatus via communication module 2013 or the like.

Driver assistance system section 2030 is composed of various devices such as millimeter-wave radar, Light Detection and Ranging (LiDAR), a camera, a positioning locator (e.g., GNSS, etc.), a map information (e.g., high definition (HD) map, autonomous driving vehicle (AV) map, etc.), a gyrosystem (e.g., Inertial Measurement Unit (IMU), Inertial Navigation System (INS), etc.), an Artificial Intelligence (AI) chip, and an AI processor for providing functions for preventing accidents or reducing the driving load of the driver, and of one or more ECUs for controlling these devices. Driving assistance system section 2030 transmits and receives various types of information via communication module 2013, and realizes a driving support function or an autonomous driving function.

Communication module 2013 can communicate with microprocessor 2031 and the components of vehicle 2001 via a communication port. For example, communication module 2013 transmits and receives data to and from drive section 2002, steering section 2003, accelerator pedal 2004, brake pedal 2005, shift lever 2006, front wheels 2007, rear wheels 2008, axle 2009, and microprocessor 2031 and memory (ROM and/or RAM) 2032 in electronic control section 2010, and sensors 2021 to 2029 provided in vehicle 2001 via the communication port 2033.

Communication module 2013 is a communication device that can be controlled by microprocessor 2031 of electronic control section 2010 and can communicate with an external apparatus. For example, various kinds of information are transmitted and received between the external apparatus via radio communication. Communication module 2013 may be either inside or outside electronic control section 2010. The external apparatus may be, for example, a base station, a mobile station, or the like.

Communication module 2013 transmits, to the external apparatus via radio communication, a current signal inputted from the current sensor to electronic control section 2010. In addition, communication module 2013 also transmits, to the external apparatus via radio communication, the rotational speed signal of the front and/or rear wheels obtained by rotation speed sensors 2022, the pneumatic signal of the front and/or rear wheels obtained by pneumatic sensors 2023, the vehicle speed signal obtained by vehicle speed sensors 2024, the acceleration signal obtained by acceleration sensors 2025, the accelerator pedal depression amount signal obtained by accelerator pedal sensor 2029, the brake pedal depression amount signal obtained by brake pedal sensor 2026, the shift lever operation signal obtained by shift lever sensor 2027, the detection signal for detecting an obstacle, a vehicle, a pedestrian, and the like obtained by object detection sensor 2028, and the like, which are signals inputted to electronic control section 2010.

Communication module 2013 receives various types of information (traffic information, signal information, inter-vehicle information, etc.) transmitted from the external apparatus, and displays the information on information service section 2012 provided in vehicle 2001. Further, communication module 2013 stores the various types of information received from the external apparatus in memory 2032 accessible by microprocessor 2031. Based on the information stored in memory 2032, microprocessor 2031 may perform control of drive section 2002, steering section 2003, accelerator pedal 2004, brake pedal 2005, shift lever 2006, front wheels 2007, rear wheels 2008, axle 2009, sensors 2021 to 2029, and the like provided in vehicle 2001.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry) (e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <Means>

The "means" in the configuration of each apparatus may be replaced with "section", "circuit", "device", or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user terminal) on a TTI-by-TTI basis to each user terminal. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful in a radio communication system.

### Reference Signs List

1 Radio communication system
11 NG-RAN
12 Base station
13 Repeater
14 Terminal
510 Transmission section
520 Reception section
530 Configuration section
540 Control section

## Claims

1. A repeater, comprising:
a reception section configured to receive a beam from a base station; and
a control section configured to determine a beam for a terminal based on beam information of the repeater, the beam information being included in the beam received and being associated with each beam of the repeater.

2. The repeater according to claim 1, wherein
the reception section receives a beam with best communication quality from the base station.

3. A communication method for a repeater, the communication method comprising:
receiving a beam from a base station; and
determining a beam for a terminal based on beam information of the repeater, the beam information being included in the beam received and being associated with each beam of the repeater.

4. A base station, comprising:
a control section configured to include beam information of a repeater in a beam of the base station, the beam information being associated with each beam of the repeater; and
a transmission section configured to transmit the beam to the repeater.

5. The base station according to claim 4, wherein
the transmission section transmits a beam with best communication quality to the repeater.

6. A communication method for a base station, the communication method comprising:
including beam information of a repeater in a beam of the base station, the beam information being associated with each beam of the repeater; and
transmitting the beam to the repeater.
